# EUROPEAN PATENT APPLICATION

(11) **EP 4 807 864 A1**
(43) Date of publication of application: **16.09.2026**
(21) Application number: 24899237.2
(22) Date of filing: 09.07.2024
(51) Int. Cl.: H01M 50/112

(54) **BATTERY CELL, BATTERY, ELECTRICAL DEVICE AND ENERGY STORAGE APPARATUS**

(30) Priority: 06.12.2023 CN 202311667671
(71) Applicant: Contemporary Amperex Technology Co., Limited, Ningde, Fujian 352100 (CN)
(72) Inventor: JIN, Haizu, Ningde, Fujian 352100 (CN); XU, Hu, Ningde, Fujian 352100 (CN); ZHAO, Fenggang, Ningde, Fujian 352100 (CN); NIU, Shaojun, Ningde, Fujian 352100 (CN); GUO, Jipeng, Ningde, Fujian 352100 (CN)
(74) Representative: Lorenz Seidler Gossel Part. mbB
(86) International application number: PCT/CN2024/104477
(87) International publication number: WO 2025/118586

(57) **Abstract**

A battery cell (10), a battery (100), an electrical device, and an energy storage apparatus. The battery cell (10) comprises a housing (1), a separation apparatus (7) and multiple electrode assemblies (2). The housing (1) is provided with an accommodating space (13), the multiple electrode assemblies (2) being accommodated in the accommodating space (13), and the separation apparatus (7) being disposed in the accommodating space (13), the separation apparatus (7) is configured to divide the accommodating space (13) into multiple sub-spaces (131), each sub-spaces (131) accommodating at least one electrode assembly (2). The separation apparatus (7) provides a separation function for the electrode assemblies (2) in each sub-space (131), so as to reduce the accumulation of expansion stress of electrode assemblies (2) in adjacent sub-spaces (131), thereby reducing the risk of the electrode assemblies (2) compressing and deforming each other, and effectively improving the reliability of a battery cell (10).

## Description

### CROSS-REFERENCE TO RELATED APPLICATIONS

The present application claims priority to Chinese Patent Application No. 202311667671.9, filed on December 06, 2023 and entitled "Battery Cell, Battery, Electrical Device and Energy Storage Apparatus", which is incorporated herein by reference in its entirety.

### TECHNICAL FIELD

The present application relates to the field of batteries, and in particular, to a battery cell, a battery, an electrical device and an energy storage apparatus.

### BACKGROUND

In recent years, new energy vehicles have been developed with a great leap. In the field of electric vehicles, power batteries play an irreplaceably important role as a power source of the electric vehicle. As new energy vehicles are heavily promoted, there is an increasing demand for power battery products, and there is a high requirement for usability of the battery as a core component of the new energy vehicle.

For battery cells, the reliability of the battery cells needs to be considered. Therefore, how to improve the reliability of battery cells is a problem to be solved urgently in battery technology.

### SUMMARY

Embodiments of the present application provide a battery cell, a battery, an electrical device and an energy storage apparatus, which can effectively improve the reliability of the battery cells.

In a first aspect, an embodiment of the present application provides a battery cell, including a housing, a separation apparatus, and multiple electrode assemblies, wherein the housing is provided with an accommodating space; the multiple electrode assemblies are accommodated in the accommodating space; and the separation apparatus is disposed in the accommodating space, the separation apparatus is configured to divide the accommodating space into multiple sub-spaces, and each sub-space accommodates at least one electrode assembly.

In the above technical solution, the separation apparatus is disposed in the accommodating space of the housing, and the separation apparatus divides the accommodating space into multiple sub-spaces. The separation apparatus performs a separation function for the electrode assemblies in each sub-space, so as to reduce the accumulation of expansion stress of electrode assemblies in adjacent sub-spaces, thereby reducing the risk of the electrode assemblies compressing and deforming each other, and effectively improving the reliability of the battery cell.

In some embodiments, the separation apparatus includes at least one separation wall, the separation wall is disposed in the accommodating space and connected to the housing, and the separation wall is configured to separate two adjacent sub-spaces.

In the above technical solution, the accommodating space inside the housing is divided into multiple sub-spaces by at least one separation wall. The structure is simple, and each separation wall can separate the electrode assemblies in two adjacent sub-spaces. Since the separation wall is connected to the housing, the expansion force generated by the expansion of the electrode assemblies in the sub-space may be transmitted to the housing through the separation wall, thereby reducing the risk of the expansion force generated by the electrode assemblies in one sub-space being transmitted to the electrode assemblies in another adjacent sub-space.

In some embodiments, the separation apparatus includes multiple separation walls, and the multiple separation walls are spaced apart in the accommodating space.

In the above technical solution, the multiple separation walls spaced apart may divide the accommodating space into more sub-spaces, so that the electrode assemblies in more sub-spaces are separated by the separation walls, and the expansion force generated by all the electrode assemblies may be transmitted to the housing through more separation walls, thereby further reducing the risk of the electrode assemblies compressing and deforming.

In some embodiments, the housing includes a first wall portion, and the multiple separation walls are connected to the first wall portion.

In the above technical solution, the multiple separation walls are all connected to the first wall portion, which may reduce the connection difficulty between the multiple separation walls and the housing, and more easily ensure the positional accuracy of the multiple separation walls.

In some embodiments, the battery cell further includes a thermal management component, an accommodating cavity is formed inside the separation wall, the thermal management component is accommodated in the accommodating cavity, an outer surface of the first wall portion is provided with an opening portion for the thermal management component to enter the accommodating cavity, and the opening portion is communicated with the accommodating cavity.

In the above technical solution, since the thermal management component is disposed in the accommodating cavity of the separation wall, the space inside the separation wall is fully utilized, and in the case of realizing the temperature management of the electrode assembly, the space inside the housing occupied by the thermal management component is reduced to free up more space for the electrode assembly, which is beneficial to improving the volumetric energy density of the battery cell. In addition, since the outer surface of the first wall portion is provided with the opening portion communicated with the accommodating cavity, the thermal management component may enter the accommodating cavity from the outside of the housing through the opening portion, and the housing does not need to be opened when the thermal management component is mounted or disassembled, making the operation more convenient.

In some embodiments, the first wall portion is a wall portion of the housing with the largest outer surface area.

In the above technical solution, the first wall portion is a wall portion of the housing with the largest outer surface area, and the first wall portion may be connected to more separation walls, so as to further reduce the accumulation of expansion stress of all the electrode assemblies.

In some embodiments, the electrode assembly includes a main body portion, a first tab and a second tab, the polarity of the first tab is opposite to the polarity of the first tab, the first tab and the second tab are disposed at one end of the main body portion facing away from the first wall portion in a first direction, the multiple separation walls are spaced apart in a second direction, and the first direction intersects the second direction; the battery cell includes a first current collecting member and a second current collecting member, the first current collecting member and the second current collecting member are disposed on one side of the main body portion facing away from the first wall portion in the first direction, the first current collecting member is connected to the first tabs of the multiple electrode assemblies, and the second current collecting member is connected to the second tabs of the multiple electrode assemblies.

In the above technical solution, the first current collecting member is connected to the first tabs of the multiple electrode assemblies to realize the convergence of the first tabs of the multiple electrode assemblies, and the second current collecting member is connected to the second tabs of the multiple electrode assemblies to realize the convergence of the second tabs of the multiple electrode assemblies, which eliminates the need to increase the thickness or volume of a single electrode assembly, and can reduce the manufacturing difficulty of the large-capacity battery cell. In addition, since the first current collecting member and the second current collecting member are disposed on one side of the main body portion facing away from the first wall portion, the first current collecting member and the second current collecting member are located on a same side of the main body portion, which is beneficial to reducing the superimposed thickness of the first current collecting member and the second current collecting member in the first direction, reducing the space inside the housing occupied by the first current collecting member and the second current collecting member, and improving the volumetric energy density of the battery cell.

In some embodiments, the housing includes a second wall portion, the second wall portion is disposed opposite to the first wall portion in the first direction, the second wall portion is provided with a first electrode terminal and a second electrode terminal, and the first electrode terminal and the second electrode terminal are respectively connected to the first current collecting member and the second current collecting member.

In the above technical solution, the second wall portion is disposed opposite to the first wall portion in the first direction, and the first electrode terminal and the second electrode terminal are disposed on the second wall portion, which can reduce the distance between the first electrode terminal and the first tab and between the second electrode terminal and the second tab, help to reduce the size of the first current collecting member and the second current collecting member, and reduce the overcurrent path from the first tab to the first electrode terminal and from the second tab to the second electrode terminal.

In some embodiments, the housing includes a second wall portion and a third wall portion, the first wall portion is disposed opposite to the second wall portion in the first direction, the third wall portion is connected to the first wall portion and the second wall portion, and the third wall portion is provided with a first electrode terminal and a second electrode terminal; the first current collecting member is provided with a first extension portion, the second current collecting member is provided with a second extension portion, both the first extension portion and the second extension portion are located between the main body portion and the third wall portion in the second direction, and the first extension portion and the second extension portion are respectively connected to the first electrode terminal and the second electrode terminal.

In the above technical solution, the first electrode terminal and the second electrode terminal are disposed on the third wall portion connected to the first wall portion and the second wall portion, so that the first electrode terminal and the second electrode terminal are not disposed on the first wall portion and the second wall portion, making it less likely for multiple battery cells to be affected by the first electrode terminal and the second electrode terminal when stacked in the first direction, and enabling the multiple battery cells to be tightly stacked in the first direction. In addition, the first current collecting member is provided with the first extension portion, the first extension portion is located between the main body portion and the third wall portion, and the first extension portion is connected to the first electrode terminal, which enables the connection region between the first current collecting member and the first tab to be farther away from the connection region between the first extension portion and the first electrode terminal, thereby reducing the risk of mutual influence and helping to reduce the connection difficulty among the first current collecting member, the first tab and the first electrode terminal. The second current collecting member is provided with the second extension portion, the second extension portion is located between the main body portion and the third wall portion, and the second extension portion is connected to the second electrode terminal, which enables the connection region between the second current collecting member and the second tab to be farther away from the connection region between the second extension portion and the second electrode terminal, thereby reducing the risk of mutual influence and helping to reduce the connection difficulty among the second current collecting member, the second tab and the second electrode terminal.

In some embodiments, the housing includes a shell and an end cover, the housing being provided with a first opening, the end cover fitting to the first opening, wherein the end cover is the first wall portion; or a wall portion of the shell opposite to the end cover is the first wall portion.

In the above technical solution, if the end cover is the first wall portion, then the multiple separation walls are connected to the end cover. The end cover has a smaller volume and weight than the shell, and the connection difficulty between the multiple separation walls and the end cover is lower. In addition, if a wall portion of the shell opposite to the end cover is the first wall portion, then the multiple separation walls are connected to the wall portion of the shell opposite to the end cover. When the battery cell is assembled, the electrode assembly may be first installed into the shell, and then the end cover is connected to the shell, making the assembly difficulty of the battery cell lower.

In some embodiments, the electrode assembly is flat, and the multiple sub-spaces are arranged in a thickness direction of the electrode assembly.

In the above technical solution, the electrode assembly is flat, and the electrode assembly has the largest expansion in its thickness direction. Since the multiple sub-spaces are arranged in the thickness direction of the electrode assembly, the expansion force generated by the expansion of the electrode assembly in the thickness direction may be borne by the separation wall, so as to reduce the accumulation of expansion stress of the electrode assemblies in adjacent sub-spaces, thereby reducing the risk of the electrode assemblies compressing and deforming each other.

In some embodiments, each sub-space accommodates the multiple electrode assemblies, and the multiple electrode assemblies in each sub-space are laminated in the thickness direction of the electrode assembly.

In the above technical solution, each sub-space accommodates the multiple electrode assemblies laminated in the thickness direction, so that the thickness of the electrode assembly in each sub-space is not too large, thereby reducing the manufacturing difficulty of the electrode assembly.

In some embodiments, the sub-space is formed inside the separation apparatus.

In the above technical solution, the sub-space is formed inside the separation apparatus, and after the electrode assembly is accommodated in the sub-space, the separation apparatus may bear the expansion force of the electrode assembly in multiple directions, thereby further improving the reliability of the battery cell.

In some embodiments, the separation apparatus includes multiple receiving units disposed in the accommodating space, and one sub-space is formed inside each receiving unit.

In the above technical solution, one sub-space is formed inside each receiving unit, and the multiple receiving units may receive the electrode assembly, and the receiving unit may bear the expansion force of the electrode assembly in the sub-space in multiple directions. In addition, after the electrode assembly is accommodated in the receiving unit, the receiving unit may limit the electrode assembly, thereby reducing the risk of the electrode assembly tilting and shaking inside the housing.

In some embodiments, two adjacent receiving units share a separation wall, and the separation wall is configured to separate the sub-spaces of the two adjacent receiving units.

In the above technical solution, two adjacent receiving units share a separation wall, which may increase the volume of the sub-space when the volume of the accommodating space is constant, so as to free up larger space for the electrode assembly and help to improve he volumetric energy density of the battery cell. In addition, two adjacent receiving units share a separation wall, which enables the multiple receiving units to be used as a whole and makes it simpler to install the separation apparatus in the housing.

In some embodiments, the battery cell further includes a thermal management component, an accommodating cavity is formed inside the separation wall, and the thermal management component is accommodated in the accommodating cavity; a second opening is formed at least one end of the receiving unit in the first direction for the electrode assembly to enter the sub-space, in the first direction, the housing includes a first wall portion disposed opposite to the separation apparatus, an outer surface of the first wall portion is provided with an opening portion for the thermal management component to enter the accommodating cavity, and the opening portion is communicated with the accommodating cavity.

In the above technical solution, since the thermal management component is disposed in the accommodating cavity of the separation wall, the space inside the separation wall is fully utilized, and in the case of realizing the temperature management of the electrode assembly, the space inside the housing occupied by the thermal management component is reduced to free up more space for the electrode assembly, which is beneficial to improving the volumetric energy density of the battery cell. In addition, since the outer surface of the first wall portion is provided with the opening portion communicated with the accommodating cavity, the thermal management component may enter the accommodating cavity from the outside of the housing through the opening portion, and the housing does not need to be opened when the thermal management component is mounted or disassembled, making the operation more convenient.

In some embodiments, the electrode assembly includes a main body portion, a first tab and a second tab, the polarity of the first tab is opposite to the polarity of the second tab, the first tab and the second tab are respectively disposed at two opposite ends of the main body portion in the first direction, and in the first direction, two opposite ends of the receiving unit are each provided with a second opening for the electrode assembly to enter the sub-space; the battery cell includes a first current collecting member and a second current collecting member, the first current collecting member and the second current collecting member are respectively disposed on two opposite sides of the main body portion in the first direction, the first current collecting member is connected to the first tabs of the multiple electrode assemblies, and the second current collecting member is connected to the second tabs of the multiple electrode assemblies.

In the above technical solution, the first tab and the second tab are respectively disposed at two opposite ends of the main body portion in the first direction, and the first current collecting member connected to the first tab and the second current collecting member connected to the second tab are respectively disposed on two opposite sides of the main body portion, which may reduce the risk of the first current collecting member and the second current collecting member interfering and shorting each other. In addition, the first current collecting member is connected to the first tabs of the multiple electrode assemblies to realize the convergence of the first tabs of the multiple electrode assemblies, and the second current collecting member is connected to the second tabs of the multiple electrode assemblies to realize the convergence of the second tabs of the multiple electrode assemblies, which eliminates the need to increase the thickness or volume of a single electrode assembly, and can reduce the manufacturing difficulty of the large-capacity battery cell.

In some embodiments, the housing includes a first wall portion and a second wall portion, the first wall portion is disposed opposite to the second wall portion in the first direction, the first wall portion faces one end of the main body portion provided with the first tab, the second wall portion faces one end of the main body portion provided with the second tab, the first wall portion is provided with a first electrode terminal, the second wall portion is provided with a second electrode terminal, and the first electrode terminal and the second electrode terminal are respectively connected to the first current collecting member and the second current collecting member.

In the above technical solution, the first wall portion faces one end of the main body portion provided with the first tab, the first electrode terminal is disposed on the first wall portion, and the first current collecting member is connected to the first electrode terminal and the first tab, which can reduce the distance between the first electrode terminal and the first tab, reduce the size of the first current collecting member, and reduce the overcurrent path from the first tab to the first electrode terminal. The second wall portion faces one end of the main body portion provided with the second tab, the second electrode terminal is disposed on the second wall portion, and the second current collecting member is connected to the second electrode terminal and the second tab, which can reduce the distance between the second electrode terminal and the second tab, reduce the size of the second current collecting member, and reduce the overcurrent path from the second tab to the second electrode terminal.

In some embodiments, the housing includes a first wall portion, a second wall portion and a third wall portion, the first wall portion is disposed opposite to the second wall portion in the first direction, the third wall portion is connected to the first wall portion and the second wall portion, and the third wall portion is provided with a first electrode terminal and a second electrode terminal; the first current collecting member is provided with a first extension portion, the second current collecting member is provided with a second extension portion, both the first extension portion and the second extension portion are located between the main body portion and the third wall portion in the second direction, the first extension portion and the second extension portion are respectively connected to the first electrode terminal and the second electrode terminal, and the second direction intersects the first direction.

In the above technical solution, the first electrode terminal and the second electrode terminal are disposed on the third wall portion connected to the first wall portion and the second wall portion, so that the first electrode terminal and the second electrode terminal are not disposed on the first wall portion and the second wall portion, making it less likely for multiple battery cells to be affected by the first electrode terminal and the second electrode terminal when stacked in the first direction, and enabling the multiple battery cells to be tightly stacked in the first direction. In addition, the first current collecting member is provided with the first extension portion, the first extension portion is located between the main body portion and the third wall portion, and the first extension portion is connected to the first electrode terminal, which enables the connection region between the first current collecting member and the first tab to be farther away from the connection region between the first extension portion and the first electrode terminal, thereby reducing the risk of mutual influence and helping to reduce the connection difficulty among the first current collecting member, the first tab and the first electrode terminal. The second current collecting member is provided with the second extension portion, the second extension portion is located between the main body portion and the third wall portion, and the second extension portion is connected to the second electrode terminal, which enables the connection region between the second current collecting member and the second tab to be farther away from the connection region between the second extension portion and the second electrode terminal, thereby reducing the risk of mutual influence and helping to reduce the connection difficulty among the second current collecting member, the second tab and the second electrode terminal.

In some embodiments, a second opening is formed at least one end of the receiving unit in the first direction for the electrode assembly to enter the sub-space; the housing includes a shell and an end cover, a first opening is formed at least one end of the shell in the second direction, the end cover is in one-to-one correspondence with the first opening, the end cover fits to the first opening, and the second direction intersects the first direction.

In the above technical solution, the receiving unit is provided with the second opening, and the electrode assembly may enter the receiving unit through the second opening, which facilitates the installation of the electrode assembly. The second opening of the receiving unit is in the first direction, the first opening of the shell is located in the second direction, and the first direction intersects the second direction, so that the shell may shield the second opening of the receiving unit to limit the electrode assembly in the receiving unit, and even if the end cover does not fit to the first opening, the electrode assembly is not easily detached from the receiving unit through the second opening.

In some embodiments, at least one wall portion of the housing disposed opposite to the separation apparatus in the first direction is a wall portion of the housing with the largest outer surface area.

In the above technical solution, the second opening is formed at least one end of the receiving unit in the first direction, and the electrode assembly may enter the receiving unit through the second opening in the first direction. Since at least one wall portion of the housing disposed opposite to the separation apparatus in the first direction is a wall portion of the housing with the largest outer surface area, the wall portion of the housing with the largest outer surface area is located in the first direction, so that the orientation of the second opening is substantially perpendicular to the wall portion of the housing with the largest outer surface area. In this way, more receiving units may be arranged in the accommodating space of the housing to accommodate more electrode assemblies.

In some embodiments, in the first direction, the accommodating space accommodates only one receiving unit; in the second direction, the accommodating space accommodates the multiple receiving units; and in a third direction, the accommodating space accommodates the multiple receiving units, and the first direction, the second direction and the third direction are not coplanar and intersect in pairs.

In the above technical solution, the accommodating space accommodates only one receiving unit in the first direction, and the accommodating space accommodates the multiple receiving units in both the second direction and the third direction. In the case where the size of the housing in the first direction is not too large, the accommodating space can accommodate more receiving units to accommodate more electrode assemblies, which is beneficial to achieving the large-capacity battery cell.

In some embodiments, at least one wall portion of the housing disposed opposite to the separation apparatus in the third direction is a wall portion of the housing with the largest outer surface area, and the first direction, the second direction and the third direction are not coplanar and intersect in pairs.

In the above technical solution, the second opening is formed at least one end of the receiving unit in the first direction, and the electrode assembly may enter the receiving unit through the second opening in the first direction. Since at least one wall portion of the housing disposed opposite to the separation apparatus in the third direction is a wall portion of the housing with the largest outer surface area, the wall portion of the housing with the largest outer surface area is located in the third direction, so that the orientation of the second opening is substantially parallel to the wall portion of the housing with the largest outer surface area, and the housing can provide more space for the receiving unit in the first direction to increase the size of the receiving unit in the first direction.

In some embodiments, in the first direction, the accommodating space accommodates only one receiving unit; in the second direction, the accommodating space accommodates the multiple receiving units; and in the third direction, the accommodating space accommodates only one receiving unit.

In the above technical solution, the accommodating space accommodates only one receiving unit in the first direction and the third direction, and the accommodating space accommodates multiple receiving units in the second direction. In the case where the size of the housing in the first direction and the size of the housing in the third direction are not too large, the accommodating space can accommodate more receiving units to accommodate more electrode assemblies, which is beneficial to achieving the large-capacity battery cell.

In some embodiments, the electrode assembly is cylindrical, and each sub-space accommodates only one electrode assembly.

In the above technical solution, the electrode assembly is cylindrical, and each sub-space accommodates only one electrode assembly. Each electrode assembly is limited by the separation apparatus, which reduces the accumulation of expansion stress of two adjacent electrode assemblies. In addition, after one electrode assembly is correspondingly accommodated in one sub-space, each sub-space can provide a certain limitation function for the corresponding electrode assembly, thereby reducing the risk of the electrode assembly tilting and shaking.

In some embodiments, the separation apparatus includes a separation wall, the separation wall is configured to separate two adjacent sub-spaces, and an accommodating cavity is formed inside the separation wall; the battery cell further includes a thermal management component, and the thermal management component is accommodated in the accommodating cavity.

In the above technical solution, the accommodating cavity is formed inside the separation wall, and the thermal management component is disposed in the accommodating cavity of the separation wall, so that the space inside the separation wall is fully utilized, and in the case of realizing the temperature management of the electrode assembly, the space inside the housing occupied by the thermal management component is reduced to free up more space for the electrode assembly, which is beneficial to improving the volumetric energy density of the battery cell.

In some embodiments, an outer surface of the housing is provided with an opening portion for the thermal management component to enter the accommodating cavity, and the opening portion is communicated with the accommodating cavity.

In the above technical solution, the outer surface of the housing is provided with the opening portion communicated with the accommodating cavity, so that the thermal management component may enter the accommodating cavity from the outside of the housing through the opening portion, and the housing does not need to be opened when the thermal management component is mounted or disassembled, making the operation more convenient.

In some embodiments, the housing is in the shape of a rectangular parallelepiped.

In the above technical solution, the housing is in the shape of a rectangular parallelepiped, so that the multiple electrode assemblies can fully utilize the internal space of the housing, thereby improving the space utilization rate of the electrode assemblies, and helping to achieve the large-capacity battery cell.

In a second aspect, an embodiment of the present application provides a battery, including the battery cell provided in any one of the embodiments of the first aspect.

In a third aspect, an embodiment of the present application provides an electrical device, including the battery cell provided in any one of the embodiments of the first aspect, where the battery cell is configured to provide electrical energy for the electrical device.

In a fourth aspect, an embodiment of the present application provides an energy storage apparatus, including the battery cell provided in any one of the embodiments of the first aspect.

### BRIEF DESCRIPTION OF THE DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic structural view of a vehicle provided in some embodiments of the present application;
FIG. 2 is a schematic structural view of a battery provided in some embodiments of the present application;
FIG. 3 is an exploded view of a battery cell (an electrode assembly being flat) provided in some embodiments of the present application;
FIG. 4 is an exploded view of a battery cell (an electrode assembly being flat) provided in some other embodiments of the present application;
FIG. 5 is a schematic view of the connection between a shell and a separation apparatus shown in FIG. 4;
FIG. 6 is a schematic structural view of the shell shown in FIG. 5;
FIG. 7 is a schematic structural view of a shell provided in some other embodiments of the present application;
FIG. 8 is a schematic view of the connection between a shell and a thermal management component provided in some embodiments of the present application;
FIG. 9 is an exploded view of a battery cell (an electrode assembly being flat) provided in yet some other embodiments of the present application;
FIG. 10 is an exploded view of a battery cell (an electrode assembly being flat) provided in still some other embodiments of the present application;
FIG. 11 is an exploded view of a battery cell (an electrode assembly being cylindrical) provided in some embodiments of the present application;
FIG. 12 is a schematic structural view of a separation apparatus shown in FIG. 11;
FIG. 13 is a top view of the separation apparatus shown in FIG. 12;
FIG. 14 is a partial enlarged view at A in FIG. 13;
FIG. 15 is a schematic structural view of a shell provided in some embodiments of the present application;
FIG. 16 is an exploded view of a battery cell (an electrode assembly being cylindrical) provided in some other embodiments of the present application;
FIG. 17 is an exploded view of a battery cell (an electrode assembly being cylindrical) provided in yet some other embodiments of the present application; and
FIG. 18 is an exploded view of a battery cell (an electrode assembly being cylindrical) provided in still some other embodiments of the present application;

Reference numerals: 1: housing; 11: shell; 111: first wall portion; 1111: outer surface of the first wall portion; 1112: opening portion; 112: second wall portion; 113: third wall portion; 114: first opening; 12: end cover; 13: accommodating space; 131: sub-space; 2: electrode assembly; 21: first tab; 22: second tab; 23: main body portion; 3: first electrode terminal; 4: second electrode terminal; 5: first current collecting member; 51: first avoidance portion; 52: first protrusion; 53: first extension portion; 6: second current collecting member; 61: second avoidance portion; 62: second protrusion; 63: second extension portion; 7: separation apparatus; 71: separation wall; 711: accommodating cavity; 72: receiving unit; 721: second opening; 8: thermal management component; 10: battery cell; 20: box; 201: first portion; 202: second portion; 100: battery; 200: controller; 300: motor; 1000: vehicle; X: first direction; Y: second direction; Z: third direction.

### DETAILED DESCRIPTION OF PREFERRED EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by those skilled in the art based on the embodiments of the present application without making creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the present application, the term "and/or" is only an associative relationship for describing associated objects, indicating that three relationships may be present. For example, A and/or B may indicate the following three cases: presence of only A, presence of both A and B, and presence of only B. In addition, the symbol "/" in the present application generally represents an "or" relationship between associated objects.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

The term "multiple" in the present application refers to more than two (including two).

In the embodiments of the present application, the battery cell may be a secondary battery, which refers to a battery cell that may be continuously used by activating an active material by means of charging the battery cell after discharging thereof.

The battery cell includes, but is not limited to, a lithium ion battery, a sodium ion battery, a sodium-lithium ion battery, a lithium metal battery, a sodium metal battery, a lithium-sulfur battery, a magnesium ion battery, a nickel-hydrogen battery, a nickelcadmium battery, a lead-acid battery, or the like.

The battery cell generally includes an electrode assembly. The electrode assembly includes a positive electrode, a negative electrode, and a spacer. During charging and discharging of the battery cell, intercalation/de-intercalation of active ions (e.g., lithium ions) are enabled at the positive electrode and negative electrode by moving the active ions between the positive electrode and negative electrode. The spacer is disposed between the positive electrode and the negative electrode, which can reduce the risk of a short circuit between the positive and negative electrodes, and at the same time, can allow active ions to pass through.

In some embodiments, the positive electrode may be a positive electrode plate which may include a positive electrode current collector and a positive electrode active material disposed on at least one surface of the positive electrode current collector.

As an example, the positive electrode current collector has two surfaces opposite in the thickness direction thereof, and the positive electrode active material is provided on either one or both of the two opposite surfaces of the positive electrode current collector.

As an example, a metal foil or a composite current collector may be used for the positive electrode current collector. For example, as the metal foil, aluminum or stainless steel which is subjected to surface treatment by silver, stainless steel, copper, aluminum, nickel, a carbon electrode, carbon, nickel, titanium, or the like can be used. The composite current collector may include a macromolecular material base layer and a metal layer. The composite current collector may be formed by forming a metal material (aluminum, an aluminum alloy, nickel, a nickel alloy, titanium, a titanium alloy, silver, a silver alloy, or the like) on a substrate of a macromolecular material (a substrate of polypropylene, polyethylene terephthalate, polybutylene terephthalate, polystyrene, polyethylene, or the like).

As an example, the positive electrode active material may include at least one of the following materials: a lithium-containing phosphate, a lithium transition metal oxide, and respective modified compounds thereof. However, the present application is not limited to these materials, and other conventional materials that can be used as a positive electrode active material of a battery may also be used. These positive electrode active materials may be used alone or in combination of two or more thereof. Here, examples of the lithium-containing phosphate may include, but are not limited to, at least one of lithium iron phosphate (e.g., LiFePO₄, also referred to as LFP), a composite material of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon. Examples of the lithium-transition metal oxide may include, but are not limited to, at least one of lithium cobalt oxide (e.g., LiCoO₂), lithium nickel oxide (e.g., LiNiO₂), lithium manganese oxide (e.g., LiMnO₂, and LiMn2O₄), lithium nickel cobalt oxide, lithium manganese cobalt oxide, lithium nickel manganese oxide, lithium nickel cobalt manganese oxide (e.g., LiNi_{1/3}, Co_{1/3}Mn_{1/3}O₂(also referred to as NCM₃₃₃), LiNi_{0.5}Co_{0.2}Mn_{0.3}O₂(also referred to as NCM₅₂₃), LiNi_{0.5}Co_{0.25}Mn_{0.25}O₂(also referred to as NCM₂₁₁), LiNi_{0.6}Co_{0.2}Mn_{0.2}O₂(also referred to as NCM₆₂₂), LiNi_{0.8}Co_{0.1}Mn_{0.1}O₂(also referred to as NCM₈₁₁), lithium nickel cobalt aluminum oxide (e.g., LiNi_{0.85}Co_{0.15}Al_{0.05}O₂), a modified compound thereof and the like.

In some embodiments, a foamed metal may be used for the positive electrode. The foamed metal may be foamed nickel, foamed copper, foamed aluminum, foamed alloy, foamed carbon, or the like. When the foamed metal is used as the positive electrode, the surface of the foamed metal may not be provided with the positive electrode active material, and of course, the positive electrode active material may also be provided. As an example, within the foamed metal, a lithium source material, which is a lithium metal and/or a lithium-rich material, a potassium metal or a sodium metal may also be filled or/and deposited.

In some embodiments, the negative electrode may be a negative electrode plate that may include a negative electrode current collector.

As an example, for the negative electrode current collector, a metal foil, a foamed metal, or a composite current collector may be employed. For example, aluminum or stainless steel which is subjected to surface treatment by silver, stainless steel, copper, aluminum, nickel, a carbon electrode, carbon, nickel, titanium, or the like can be used as the metal foil. The foamed metal may be foamed nickel, foamed copper, foamed aluminum, foamed alloy, or the like. The composite current collector may include a macromolecular material base layer and a metal layer. The composite current collector may be formed by forming a metal material (copper, a copper alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the negative electrode plate may include a negative electrode current collector and a negative electrode active material provided on at least one surface of the negative electrode current collector.

As an example, the negative electrode current collector has two surfaces opposite in its own thickness direction, and the negative electrode active material is provided on either one or both of the two opposite surfaces of the negative electrode current collector.

As an example, for the negative electrode active material, a negative electrode active material which is known in the art for a battery cell may be used. As an example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as a negative electrode active material of a battery may also be used. These negative electrode active materials may be used alone or in combination of two or more thereof.

In some embodiments, the material of the positive electrode current collector may be aluminum and the material of the negative electrode current collector may be copper.

In some implementations, the spacer is a separator. Any known porous separator with good chemical stability and mechanical stability may be used as the separator.

As an example, a material of the separator may be selected from at least one of a glass fiber, a non-woven fabric, polyethylene, polypropylene, and polyvinylidene fluoride. The separator may be a single-layer film or a multi-layer composite film. When the separator is a multi-layer composite film, the materials of respective layers may be the same or different. The spacer may be a single component located between the positive electrode and negative electrode, or may be attached to the surfaces of the positive electrode and negative electrode.

In some implementations, the spacer is a solid electrolyte. The solid electrolyte is disposed between the positive electrode and the negative electrode, and serves to transfer ions and separate the positive electrode and negative electrode.

In some implementations, the battery cell further includes an electrolyte that functions to conduct ions between the positive electrode and negative electrode. The electrolyte may be liquid, gel, or solid. Here, a liquid electrolyte includes an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from ether solvents. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1, 3-dioxolane, tetrahydrofuran, methyltetrahydrofuran, diphenyl ether, and a crown ether.

Here, a gel electrolyte includes a backbone network using a polymer as an electrolyte, in combination with an ionic liquid - lithium salt.

Here, the solid electrolyte includes a polymer solid electrolyte, an inorganic solid electrolyte, and a composite solid electrolyte.

As an example, the polymer solid electrolyte may be polyether (polyethylene oxide), polysiloxane, polycarbonate, polyacrylonitrile, polyvinylidene fluoride, polymethyl methacrylate, a single-ion polymer, a poly-ionic liquid-lithium salt, cellulose, or the like.

As an example, the inorganic solid electrolyte may be one or more of an oxide solid electrolyte (crystalline perovskites, sodium superconducting ion conductors, and garnets, amorphous LiPON thin films), a sulfide solid electrolyte (crystalline lithium-superion conductors (lithium germanium phosphorus sulfide, and argyrodite), and amorphous sulfides), and a halide solid electrolyte, a nitride solid electrolyte, and a hydride solid electrolyte.

As an example, the composite solid electrolyte is formed by adding an inorganic solid electrolyte filler in a polymer solid electrolyte.

In some implementations, the electrode assembly is of a wound structure. The positive electrode plate and the negative electrode plate are wound in a wound structure.

In some implementations, the electrode assembly is of a laminated structure.

As an example, multiple positive electrode plates and multiple negative electrode plates may be respectively provided, and are alternately laminated.

As an example, multiple positive electrode plates may be provided, the negative electrode plate may be folded to form multiple laminated folding sections, and one positive electrode plate is sandwiched between adjacent folding sections.

As an example, the positive electrode plate and negative electrode plate are both folded to form multiple laminated folding sections.

As an example, multiple spacers may be provided, between any adjacent positive electrode plates or negative electrode plates respectively.

As an example, the spacer may be continuously provided between any adjacent positive electrode plates or negative electrode plates by folding or winding.

In some implementations, the electrode assembly may have a cylindrical shape, a flat shape, a polygonal column shape, or the like.

In some implementations, the electrode assembly is provided with a tab that may conduct current from the electrode assembly. The tab includes a positive electrode tab and a negative electrode tab.

In some implementations, the battery cell may include a housing. The housing is used to enclose components such as the electrode assembly and the electrolyte. The housing may be a steel shell, an aluminum shell, a plastic shell (e.g., polypropylene), a composite metal shell (e.g., a copper-aluminum composite housing), an aluminum plastic film, or the like.

As an example, the battery cell can be a cylindrical battery cell, a prismatic battery cell, a pouch battery cell, or a battery cell of other shapes. The prismatic battery cell includes a square-shell battery cell, a blade-shaped battery cell, and a polygon prism battery cell, for example, a hexagonal prism battery cell and the like.

A battery mentioned in the embodiments of the present application refers to a single physical module including one or more battery cells to provide a higher voltage and capacity.

In some embodiments, the battery may be a battery module, and when there are multiple battery cells, the multiple battery cells are arranged and fixed to form a battery module.

In some embodiments, the battery may be a battery pack including a box and a battery cell, and the battery cell or the battery module is accommodated in the box.

In some embodiments, the box may be a part of a chassis structure of a vehicle. For example, a part of the box may be at least a part of a floor of a vehicle, or a part of the box may be at least a part of a cross beam and a side beam of a vehicle.

For a general battery cell, the battery cell usually includes a housing and an electrode assembly accommodated in the housing. With the increasing demand for the capacity of the battery cell, in a large-capacity battery cell in the related art, the capacity of the battery cell may be increased by means of a large-sized electrode assembly. However, whether the electrode assembly is a laminated electrode assembly or a wound electrode assembly, due to the limitation of the manufacturing process, it is difficult to make the thickness or volume of the electrode assembly large enough. Making the thickness or volume of the electrode assembly large will easily lead to the phenomenon of wrinkling of an electrode plate, resulting in poor production quality of the electrode assembly.

In order to meet the requirement of the large capacity of the battery cell, it may also be achieved by increasing the number of electrode assemblies in the housing. However, as the number of electrode assemblies inside the housing increases, the accumulation of expansion stress of multiple electrode assemblies becomes more severe. During charging and discharging of the battery cell, the multiple electrode assemblies easily compress and deform each other due to expansion, and even the electrode assemblies are damaged, thereby affecting the reliability of the battery cell.

Based on the above considerations, in order to solve the problem of the severe accumulation of the expansion force among the multiple electrode assemblies, an embodiment of the present application provides a battery cell, in which a separation apparatus is disposed in a housing, and an accommodating space of the housing is divided into multiple sub-spaces by means of the separation apparatus. In this way, the separation apparatus provides a separation function for the electrode assemblies in each sub-space, so as to reduce the accumulation of expansion stress of electrode assemblies in adjacent sub-spaces, thereby reducing the risk of the electrode assemblies compressing and deforming each other, and effectively improving the reliability of the battery cell.

The technical solutions described in the embodiments of the present application are applicable to batteries and electrical devices using batteries.

The electrical device may be a vehicle, a cell phone, a portable device, a notebook computer, a ship, a spacecraft, an electric toy, an electric tool, etc. The vehicle may be a fuel vehicle, a gas vehicle, or a new energy vehicle, and the new energy vehicle may be a battery electric vehicle, a hybrid vehicle, or a range-extended electric vehicle. The spacecraft may include aircrafts, rockets, space shuttles, spaceships, and the like. The electric toy may include stationary or mobile electric toys, such as game machines, electric car toys, electric ship toys, electric airplane toys, and the like. The electric tool may include metal cutting electric tools, grinding electric tools, assembly electric tools, and electric tools for railways, such as electric drills, electric sanders, electric wrenches, electric screwdrivers, electric hammers, impact drills, concrete vibrators, electric planers, and the like.

To facilitate description, in the following embodiments, a vehicle is used as an example of the electrical device.

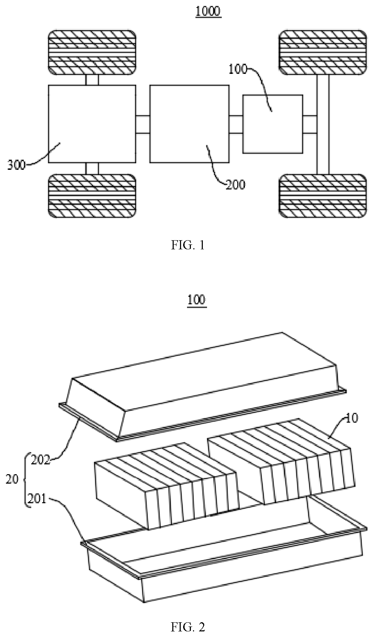

Referring to FIG. 1, FIG. 1 is a schematic structural view of a vehicle 1000 provided in some embodiments of the present application. A battery 100 is disposed inside the vehicle 1000. The battery 100 may be disposed at a bottom, head, or tail of the vehicle 1000. The battery 100 may be used to power the vehicle 1000. For example, the battery 100 may be used as an operating power source of the vehicle 1000.

The vehicle 1000 may further include a controller 200 and a motor 300, where the controller 200 is used to control the battery 100 to power the motor 300, for example, for a working power requirement of the vehicle 1000 during starting, navigating, and driving.

In some embodiments of the present application, the battery 100 may be used not only as an operating power source for the vehicle 1000, but also as a driving power source for the vehicle 1000, instead of or partially instead of fuel or natural gas to provide driving power for the vehicle 1000.

Referring to FIG. 2, FIG.2 is an exploded view of a battery 100 provided in some embodiments of the present application. The battery 100 may include a battery cell 10 and a box 20, and the battery cell 10 is accommodated in the box 20.

Here, the box 20, as a component that accommodates the battery cell 10, provides a receiving space for the battery cell 10, and the box 20 may have various structures. In some embodiments, the box 20 may include a first portion 201 and a second portion 202, and the first portion 201 and the second portion 202 fit to each other to define a receiving space for accommodating the battery cell 10. The first portion 201 and the second portion 202 may have various shapes, for example, a rectangular parallelepiped, a cylinder, etc. The first portion 201 may have a hollow structure with one open side, the second portion 202 may also have a hollow structure with one open side, and the open side of the second portion 202 fits to the open side of the first portion 201 to form the box 20 having a receiving space. Also, the first portion 201 may have a hollow structure with one open side, the second portion 202 may have a plate-like structure, and the second portion 202 fits to the open side of the first portion 201 to form the box 20 having a receiving space. The first portion 201 and the second portion 202 may be sealed by a sealing element which may be a seal ring, a sealant, etc.

In the battery 100, one or more battery cells 10 may be provided. If multiple battery cells 10 are provided, the multiple battery cells 10 may be subjected to series connection, parallel connection, or series-parallel connection, and the series-parallel connection means that the multiple battery cells 10 are subjected to both series connection, and parallel connection. The multiple battery cells 10 are subjected to series connection, or parallel connection, or series-parallel connection to form a battery module, and multiple battery modules are integrated by series connection, parallel connection, or series-parallel connection, and accommodated in the box 20. Also, all of the battery cells 10 are integrated by series connection, parallel connection, or series-parallel connection, and then all of the battery cells 10 are accommodated in the box 20.

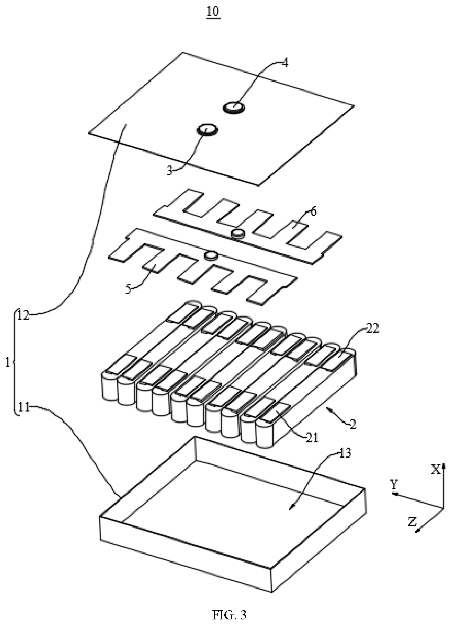

Referring to FIG. 3, FIG. 3 is an exploded view of a battery cell 10 (an electrode assembly being flat) provided in some embodiments of the present application. The battery cell 10 may include a housing 1, and an electrode assembly 2 which is accommodated in the housing 1.

In some embodiments, the housing 1 may include a shell 11 and an end cover 12, wherein the shell is provided with an opening, and the end cover 12 closes the opening of the shell 11.

The shell 11 is a component for accommodating the electrode assembly 2. The shell 11 may be of a hollow structure in which an opening is formed at one end, or the shell 11 may be of a hollow structure in which openings are formed at both ends. The shell 11 may have various shapes such as a cylinder, a rectangular parallelepiped shape, or the like. The shell 11 may be made of various materials, for example, copper, iron, aluminum, steel, and an aluminum alloy.

The end cover 12 is a component that closes the opening of the shell 11 to insulate the internal environment of the battery cell 10 from the external environment. The end cover 12 and the shell 11 jointly define an accommodating space 13 for accommodating the electrode assembly 2, an electrolytic solution, and other components. The end cover 12 may be connected to the shell 11 by welding or rounded seam to close the opening of the shell 11. The end cover 12 may have a shape adapted to the shape of the shell 11. For example, the shell 11 is of a rectangular parallelepiped structure, and the end cover 12 is of a rectangular plate-like structure adapted to the shell 11. For another example, the shell 11 is of a cylinder structure, and the end cover 12 is of a circular plate-like structure adapted to the shell 11. The materials for the end cover 12 may also be various, such as, copper, iron, aluminum, steel, an aluminum alloy, plastic, or the like, and the materials for the end cover 12 may be the same as or different from that for the shell 11.

In an embodiment in which an opening is formed at one end of the shell 11, one end cover 12 may be provided correspondingly. In an embodiment in which openings are formed at two ends of the shell 11, two end covers 12 may be provided correspondingly, the two end covers 12 respectively close the two openings of the shell 11, and the two end covers 12 and the shell 11 jointly define the accommodating space 13.

The electrode assembly 2 may be of a laminated structure or a wound structure. Multiple electrode assemblies 2 may be provided, which are accommodated in the housing 1.

In some embodiments, the battery cell 10 may further include electrode terminals provided on the housing 1, and the electrode terminals are used to electrically connect to the tabs of the electrode assembly 2 to output electric power of the battery cell 10. The electrode terminals may be disposed on the shell 11 of the housing 1, or may be disposed on the end cover 12 of the housing 1. The electrode terminals may be directly connected to the tabs. For example, the electrode terminals may be directly welded to the tabs. The electrode terminals may be indirectly connected to the tabs. For example, the electrode terminals may be indirectly connected to the tabs by a current collecting member. The current collecting member may be a metal conductor, such as copper, iron, aluminum, steel, an aluminum alloy, or the like.

As an example, as shown in FIG. 3, an opening is formed at one end of the shell 11, one end cover 12 is provided in the housing 1, and the one end cover 12 closes one opening of the shell 11. The end cover 12 is provided with a first electrode terminal 3 and a second electrode terminal 4. A first tab 21 and a second tab 22 are formed at one end of the electrode assembly 2 facing the end cover 12. The polarity of the first tab 21 is opposite to the polarity of the second tab 22. The first tab 21 is connected to the first electrode terminal 3 through a first current collecting member 5 to realize the electrical connection between the first tab 21 and the first electrode terminal 3, and the second tab 22 is connected to the second electrode terminal 4 through a second current collecting member 6 to realize the electrical connection between the second tab 22 and the second electrode terminal 4.

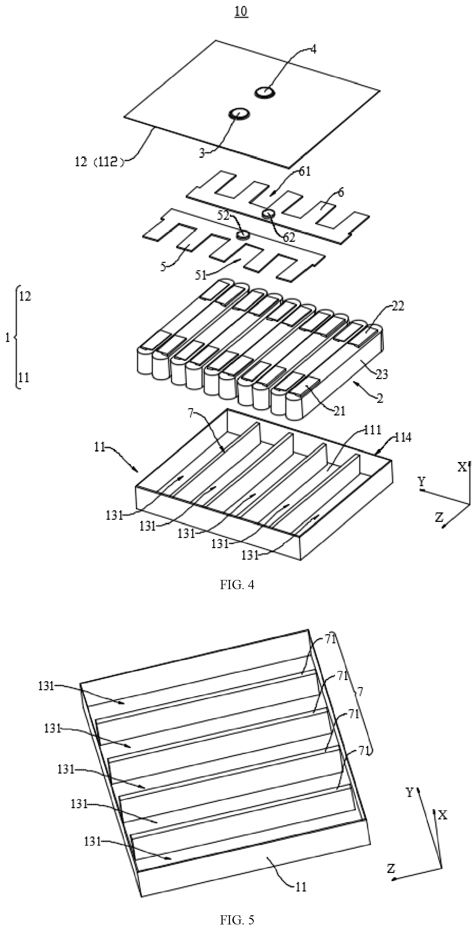

Referring to FIG. 4, FIG. 4 is a schematic structural view of a battery cell 10 provided in some other embodiments of the present application. An embodiment of the present application provides a battery cell 10, including a housing 1, a separation apparatus 7, and multiple electrode assemblies 2. The housing 1 is provided with an accommodating space 13 (shown in FIG. 3), and the multiple electrode assemblies 2 are accommodated in the accommodating space 13. The separation apparatus 7 is disposed in the accommodating space 13, the separation apparatus 7 is configured to divide the accommodating space 13 into multiple sub-spaces 131, and each sub-space 131 accommodates at least one electrode assembly 2.

The housing 1 may be in the shape of a cylinder, a prism, or the like. Here, the prism includes a triangular prism, a quadrangular prism, a pentagonal prism, a hexagonal prism, or the like. The quadrangular prism includes a rectangular parallelepiped, a cube, or the like. The multiple electrode assemblies 2 in the housing 1 may be arranged in a certain direction. Taking the housing 1 being a rectangular parallelepiped as an example, the battery cell 10 is a battery cell in the shape of a rectangular parallelepiped, and the multiple electrode assemblies 2 may be arranged in a length direction, a width direction or a thickness direction of the battery cell 10, wherein the thickness of the battery cell 10 is less than the length and width of the battery cell 10, and the length of the battery cell 10 is greater than or equal to the width of the battery cell 10. The multiple electrode assemblies 2 in the housing 1 may also be arranged in multiple directions, for example, the multiple electrode assemblies 2 are distributed in the housing 1 in multiple rows and multiple columns. The electrode assemblies 2 in the housing 1 may be two, three, four, five, etc. As an example, the number of electrode assemblies 2 is not less than 5.

The separation apparatus 7 is a component of the battery cell 10 that divides the accommodating space 13 of the housing 1 into multiple sub-spaces 131. The sub-space 131 may be jointly defined by the separation apparatus 7 and the housing 1, or the sub-space 131 may be defined by the separation apparatus 7, for example, the sub-space 131 is formed inside the separation apparatus 7. The separation apparatus 7 is disposed in the accommodating space 13. The separation apparatus 7 may be connected to the housing 1 to fix the separation apparatus 7 to the housing 1. For example, the separation apparatus 7 is connected to the end cover 12 of the housing 1, and for another example, the separation apparatus 7 is connected to the shell 11 of the housing 1. Also, the separation apparatus 7 may be placed in the housing 1. The separation apparatus 7 and the housing 1 only keep in contact with each other, and the two are not connected together. For example, the separation apparatus 7 is placed in the shell 11 of the housing 1, and the separation apparatus 7 is in contact with the shell 11.

In the housing 1, the total space of the multiple sub-spaces 131 is a part of the accommodating space 13, and each sub-space 131 may accommodate one electrode assembly 2 or multiple electrode assemblies 2. The multiple sub-spaces 131 may be arranged in a certain direction. Taking the battery cell 10 being a battery cell in the shape of a rectangular parallelepiped as an example, the multiple sub-spaces 131 may be arranged in the length, width or thickness direction of the battery cell 10. The multiple sub-spaces 131 may also be arranged in multiple directions, for example, the multiple sub-spaces 131 are distributed in multiple rows and multiple columns.

In this embodiment, the separation apparatus 7 is disposed in the accommodating space 13 of the housing 1, and the separation apparatus 7 divides the accommodating space 13 into multiple sub-spaces 131. The separation apparatus 7 performs a separation function for the electrode assemblies 2 in each sub-space 131, so as to reduce the accumulation of expansion stress of electrode assemblies 2 in adjacent sub-spaces 131, thereby reducing the risk of the electrode assemblies 2 compressing and deforming each other, and effectively improving the reliability of the battery cell 10.

In some embodiments, referring to FIG. 5, FIG. 5 is a schematic view of the connection between the shell 11 and the separation apparatus 7 shown in FIG. 4. The separation apparatus 7 includes at least one separation wall 71, the separation wall 71 is disposed in the accommodating space 13 and connected to the housing 1, and the separation wall 71 is configured to separate two adjacent sub-spaces 131.

One or more separation walls 71 may be provided. The number of the sub-spaces 131 may be one more than the number of the separation walls 71. For example, if one separation wall 71 is provided, then two sub-spaces 131 are provided. For another example, if two separation walls 71 are provided, then three sub-spaces 131 are provided.

The separation wall 71 may have a plate shape, and the separation wall 71 may have a solid structure or a hollow structure. The separation wall 71 is connected to the housing 1, so that the separation wall 71 is fixed to the housing 1. The separation wall 71 may be connected to the shell 11 or the end cover 12 of the housing 1, or the separation wall 71 may be connected to both the shell 11 and the end cover 12. If the separation wall 71 is connected to the shell 11, the separation wall 71 may be connected to one wall portion of the shell 11 or may be connected to multiple wall portions of the shell 11. If multiple separation walls 71 are provided, the multiple separation walls 71 may be connected to a same wall portion of the housing 1, for example, the multiple separation walls 71 are all connected to the end cover 12 of the housing 1. The multiple separation walls 71 may also be connected to different wall portions of the housing 1, for example, some of the multiple separation walls 71 may be connected to the end cover 12 and others may be connected to the shell 11.

In this embodiment, the accommodating space 13 inside the housing 1 is divided into multiple sub-spaces 131 by at least one separation wall 71. The structure is simple, and each separation wall 71 can separate the electrode assemblies in two adjacent sub-spaces. Since the separation wall 71 is connected to the housing 1, the expansion force generated by the expansion of the electrode assemblies 2 in the sub-space 131 may be transmitted to the housing 1 through the separation wall 71, thereby reducing the risk of the expansion force generated by the electrode assemblies 2 in one sub-space 131 being transmitted to the electrode assemblies 2 in another adjacent sub-space 131.

In some embodiments, continuously referring to FIG. 5, the separation apparatus 7 includes multiple separation walls 71, and the multiple separation walls 71 are spaced apart in the accommodating space 13.

Taking the housing 1 being in the shape of a rectangular parallelepiped as an example, the arrangement direction of the multiple separation walls 71 may be parallel to the length direction, the width direction or the thickness direction of the battery cell 10. As an example, in FIG. 5, the arrangement direction of the multiple separation walls 71 is parallel to the length direction of the battery cell 10, four separation walls 71 are provided, and the four separation walls 71 divide the accommodating space 13 into five sub-spaces 131.

As an example, in FIG. 5, a first direction X is parallel to the thickness direction of the battery cell 10, a second direction Y is parallel to the length direction of the battery cell 10, and a third direction Z is parallel to the width direction of the battery cell 10.

In this embodiment, the multiple separation walls 71 spaced apart may divide the accommodating space 13 into more sub-spaces 131, so that the electrode assemblies 2 in more sub-spaces 131 are separated by the separation walls 71, and the expansion force generated by all the electrode assemblies 2 may be transmitted to the housing 1 through more separation walls 71, thereby further reducing the risk of the electrode assemblies 2 compressing and deforming.

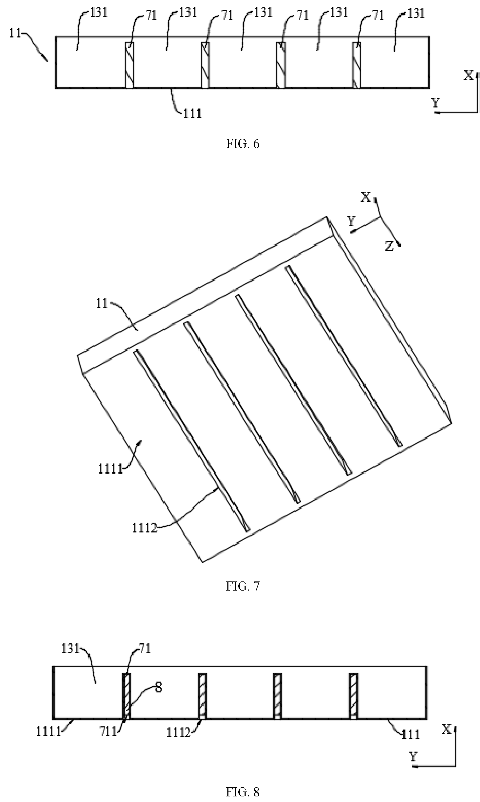

In some embodiments, referring to FIG. 6, FIG. 6 is a schematic structural view of the shell 11 shown in FIG. 5. The housing 1 (not shown in FIG. 6) includes a first wall portion 111, and the multiple separation walls 71 are connected to the first wall portion 111.

The multiple separation walls 71 are connected to a same wall portion of the housing 1, and the wall portion is the first wall portion 111. The first wall portion 111 may be a wall portion of the housing 1 in the length direction of the battery cell 10, may be a wall portion of the housing 1 in the width direction of the battery cell 10, or may be a wall portion of the housing 1 in the thickness direction of the battery cell 10.

In the housing 1, the end cover 12 may be used as the first wall portion 111, or one wall portion of the shell 11 may be used as the first wall portion 111. In an embodiment in which one wall portion of the shell 11 is used as the first wall portion 111, a wall portion of the shell 11 opposite to the end cover 12 may be used as the first wall portion 111, or a wall portion of the shell 11 adjacent to the end cover 12 may be used as the first wall portion 111.

The separation wall 71 and the first wall portion 111 may be integrally formed, or the separation wall 71 and the first wall portion 111 may be separately disposed and connected, for example, the separation wall 71 is welded to the first wall portion 111.

In this embodiment, the multiple separation walls 71 are all connected to the first wall portion 111, which may reduce the connection difficulty between the multiple separation walls 71 and the housing 1, and more easily ensure the positional accuracy of the multiple separation walls 71.

In some embodiments, referring to FIGS. 7 and 8, FIG. 7 is a schematic structural view of the shell 11 provided in some other embodiments of the present application; and FIG. 8 is a schematic view of the connection between the shell 11 and a thermal management component 8 provided in some embodiments of the present application. The battery cell 10 may further include a thermal management component 8, an accommodating cavity 711 is formed inside the separation wall 71, the thermal management component 8 is accommodated in the accommodating cavity 711, an outer surface 1111 of the first wall portion is provided with an opening portion 1112 for the thermal management component 8 to enter the accommodating cavity 711, and the opening portion 1112 is communicated with the accommodating cavity 711.

The thermal management component 8 is a component for managing the temperature of the battery cell 10. The thermal management component 8 is used for heat exchange with the battery cell 10 to manage the temperature of the battery cell 10. The thermal management component 8 may be a heating component for heating the battery cell 10, or may be a cooling component for cooling the battery cell 10. The cooling component may be a heat dissipation plate, a water-cooling plate, or the like.

The accommodating cavity 711 is formed inside the separation wall 71, so that the separation wall 71 is of a hollow structure. The accommodating cavity 711 and the sub-space 131 are separated by a cavity wall of the accommodating cavity 711, that is, the accommodating cavity 711 and the sub-space 131 are independent of each other and are not communicated with each other, and an electrolyte solution in the sub-space 131 does not enter the accommodating cavity 711. The opening portion 1112 on the outer surface 1111 of the first wall portion is an entrance for the thermal management component 8 to enter the accommodating cavity 711, and the thermal management component 8 may enter the accommodating cavity 711 through the opening portion 1112. The opening portion 1112 on the outer surface 1111 of the first wall portion may be in one-to-one correspondence with the separation wall 71.

The thermal management component 8 is accommodated in the accommodating cavity 711. A part of the thermal management component 8 may be accommodated in the accommodating cavity 711, or the entire thermal management component 8 may be accommodated in the accommodating cavity 711. The thermal management component 8 may be in contact with the cavity wall of the accommodating cavity 711 to better exchange heat with the battery cell 10.

In this embodiment, the thermal management component 8 is disposed in the accommodating cavity 711 of the separation wall 71, so that the space inside the separation wall 71 is fully utilized, and in the case of realizing the temperature management of the electrode assembly 2, the space inside the housing 1 occupied by the thermal management component 8 is reduced to free up more space for the electrode assembly 2, which is beneficial to improving the volumetric energy density of the battery cell 10. In addition, since the outer surface 1111 of the first wall portion is provided with the opening portion 1112 communicated with the accommodating cavity 711, the thermal management component 8 may enter the accommodating cavity 711 from the outside of the housing 1 through the opening portion 1112, and the housing 1 does not need to be opened when the thermal management component 8 is mounted or disassembled, making the operation more convenient.

In some embodiments, the first wall portion is a wall portion of the housing 1 with the largest outer surface area.

Taking the housing 1 being in the shape of a rectangular parallelepiped as an example, the first wall portion 111 is a wall portion of the housing 1 in the thickness direction of the battery cell 10. The end cover 12 of the housing 1 may be used as the first wall portion 111, or a wall portion of the shell 11 of the housing 1 opposite to the end cover 12 may be used as the first wall portion 111. In an embodiment shown in FIG. 8, a wall portion of the shell 11 opposite to the end cover 12 is used as the first wall portion 111.

In this embodiment, the first wall portion 111 is a wall portion of the housing 1 with the largest outer surface area, and the first wall portion 111 may be connected to more separation walls 71, so as to further reduce the accumulation of expansion stress of all the electrode assemblies 2.

In some embodiments, continuously referring to FIG. 4, the electrode assembly 2 may include a main body portion 23, a first tab 21 and a second tab 22, the polarity of the first tab 21 is opposite to the polarity of the second tab 22, the first tab 21 and the second tab 22 are disposed at one end of the main body portion 23 facing away from the first wall portion 111 in the first direction X, the multiple separation walls 71 are spaced apart in the second direction Y, and the first direction X intersects the second direction Y. The battery cell 10 includes a first current collecting member 5 and a second current collecting member 6, the first current collecting member 5 and the second current collecting member 6 are disposed on one side of the main body portion 23 facing away from the first wall portion 111 in the first direction X, the first current collecting member 5 is connected to the first tabs 21 of the multiple electrode assemblies 2, and the second current collecting member 6 is connected to the second tabs 22 of the multiple electrode assemblies 2.

The first tab 21 and the second tab 22 are disposed at a same end of the main body portion 23 in the first direction X, one of the first tab 21 and the second tab 22 is a positive electrode tab, and the other is a negative electrode tab. The main body portion 23 may be a portion of the electrode assembly 2 corresponding to a region of an electrode plate coated with an active material layer, the positive electrode tab may be a portion of a positive electrode plate that is not coated with a positive electrode active material layer, and the negative electrode tab may be a portion of a negative electrode plate that is not coated with the negative electrode active material layer.

The multiple separation walls 71 are spaced apart in the second direction Y, and it may be understood that if multiple sub-spaces 131 are provided, then the multiple sub-spaces 131 are arranged in the second direction Y. The multiple electrode assemblies 2 in the battery cell 10 may be arranged in the second direction Y, and in the second direction Y, each sub-space 131 may accommodate one electrode assembly 2 or multiple electrode assemblies 2. The second direction Y and the first direction X may be arranged at an acute angle, at a right angle or at an obtuse angle. Taking the housing 1 being in the shape of a rectangular parallelepiped as an example, if the second direction Y is perpendicular to the first direction X, the first direction X and the second direction Y may be any two of the length direction, the width direction and the thickness direction of the battery cell 10.

Both the first current collecting member 5 and the second current collecting member 6 are located in the accommodating space 13. The first current collecting member 5 and the second current collecting member 6 are both conductors. The materials of the first current collecting member 5 and the second current collecting member 6 may be the same or different. The material of the first current collecting member 5 may be copper, iron, aluminum, steel, an aluminum alloy, etc., and the material of the second current collecting member 6 may be copper, iron, aluminum, steel, an aluminum alloy, etc. The first current collecting member 5 and the second current collecting member 6 may have a sheet-shaped structure. The first current collecting member 5 and the second current collecting member 6 are located on a same side of the main body portion 23, so as to be respectively connected to the first tab 21 and the second tab 22 located on the side of the main body portion 23. The first tabs 21 of all the electrode assemblies 2 are connected to the first current collecting member 5, and the second tabs 22 of all the electrode assemblies 2 are connected to the second current collecting member 6. The first tab 21 may be connected to the first current collecting member 5 in various ways to realize the electrical connection between the first tab 21 and the first current collecting member 5, such as welding, conductive adhesive bonding, etc. The second tab 22 may be connected to the second current collecting member 6 in various ways to realize the electrical connection between the second tab 22 and the second current collecting member 6, such as welding, conductive adhesive bonding, etc.

The first current collecting member 5 and the second current collecting member 6 are spaced apart in the third direction Z. The separation wall 71 extends in the third direction Z. In the third direction Z, one end or two ends of the separation wall 71 may be connected to the corresponding wall portion of the housing 1, or one end or two ends of the separation wall 71 may be spaced apart from the corresponding wall portion of the housing 1.

The first direction X, the second direction Y and the third direction Z intersect in pairs and are not coplanar. The third direction Z and the first direction X may be arranged at an acute angle, at a right angle or at an obtuse angle, and the third direction Z and the second direction Y may be arranged at an acute angle, at a right angle or at an obtuse angle. Taking the first direction X, the second direction Y and the third direction Z being perpendicular in pairs as an example, one of the first direction X, the second direction Y and the third direction Z may be parallel to the length direction of the battery cell 10, another one may be parallel to the width direction of the battery cell 10, and the other one may be parallel to the thickness direction of the battery cell 10. As an example, in FIG. 4, the first direction X is parallel to the thickness direction of the battery cell 10, the second direction Y is parallel to the length direction of the battery cell 10, and the third direction Z is parallel to the width direction of the battery cell 10.

As an example, the first tab 21 may be bent around the first current collecting member 5, so that a part of the first tab 21 is located on one side of the first current collecting member 5 facing away from the first wall portion 111 and is connected to the second current collecting member 6. Specifically, the first current collecting member 5 is provided with a first avoidance portion 51 penetrating through the first current collecting member 5 in the first direction X, the first tab 21 passes through the first avoidance portion 51, and a part of the first tab 21 is located on one side of the first current collecting member 5 facing away from the first wall portion 111 and is connected to the first current collecting member 5. The second tab 22 may be bent around the second current collecting member 6, so that a part of the second tab 22 is located on one side of the second current collecting member 6 facing away from the first wall portion 111 and is connected to the second current collecting member 6. Specifically, the second current collecting member 6 is provided with a second avoidance portion 61 penetrating through the second current collecting member 6 in the first direction X, the second tab 22 passes through the second avoidance portion 61, and a part of the second tab 22 is located on one side of the second current collecting member 6 facing away from the first wall portion 111 and is connected to the second current collecting member 6.

In this embodiment, the first current collecting member 5 is connected to the first tabs 21 of the multiple electrode assemblies 2 to realize the convergence of the first tabs 21 of the multiple electrode assemblies 2, and the second current collecting member 6 is connected to the second tabs 22 of the multiple electrode assemblies 2 to realize the convergence of the second tabs 22 of the multiple electrode assemblies 2, which eliminates the need to increase the thickness or volume of a single electrode assembly 2, and can reduce the manufacturing difficulty of the large-capacity battery cell 10. In addition, since the first current collecting member 5 and the second current collecting member 6 are disposed on one side of the main body portion 23 facing away from the first wall portion 111, the first current collecting member 5 and the second current collecting member 6 are located on a same side of the main body portion 23, which is beneficial to reducing the superimposed thickness of the first current collecting member 5 and the second current collecting member 6 in the first direction X, reducing the space inside the housing 1 occupied by the first current collecting member 5 and the second current collecting member 6, and improving the volumetric energy density of the battery cell 10.

In some embodiments, continuously referring to FIG. 4, the housing 1 may include a second wall portion 112, the second wall portion 112, the second wall portion 112 is disposed opposite to the first wall portion 111 in the first direction X, the second wall portion 112 is provided with a first electrode terminal 3 and a second electrode terminal 4, and the first electrode terminal 3 and the second electrode terminal 4 are respectively connected to the first current collecting member 5 and the second current collecting member 6.

The second wall portion 112 is a wall portion of the housing 1 opposite to the first wall portion 111. In an embodiment in which an opening is formed at one end of the shell 11, one of the second wall portion 112 and the first wall portion 111 may be the end cover 12, and the other may be a wall portion of the shell 11 opposite to the end cover 12, or the second wall portion 112 and the first wall portion 111 may be respectively two opposite wall portions of the shell 11. In an embodiment in which openings are formed at two ends of the shell 11, the second wall portion 112 and the first wall portion 111 may be respectively two opposite wall portions of the shell 11, or the second wall portion 112 and the first wall portion 111 may be respectively two end covers 12. As an example, in FIG. 4, an opening is formed at one end of the shell 11, the end cover 12 is the second wall portion 112, a wall portion of the shell 11 opposite to the end cover 12 is the first wall portion 111, and the separation wall 71 is connected to the first wall portion 111.

The first electrode terminal 3 and the second electrode terminal 4 are components of the battery cell 10 for being connected to an external component or an external device to input or output electric energy of the battery cell 10. The first electrode terminal 3 and the second electrode terminal 4 may be columnar, and the first electrode terminal 3 and the second electrode terminal 4 may be installed on the second wall portion 112 in an insulated manner. In the first direction X, both the first current collecting member 5 and the second current collecting member 6 are located between the main body portion 23 and the second wall portion 112. The first current collecting member 5 may be connected to the first electrode terminal 3 in various ways to realize the electrical connection between the first current collecting member 5 and the first electrode terminal 3, such as welding, conductive adhesive bonding, etc. In order to facilitate the connection between the first current collecting member 5 and the first electrode terminal 3, a first protrusion 52 may be provided on a surface of the first current collecting member 5 facing the first electrode terminal 3. The second current collecting member 6 may be connected to the second electrode terminal 4 in various ways to realize the electrical connection between the second current collecting member 6 and the second electrode terminal 4, such as welding, conductive adhesive bonding, etc. In order to facilitate the connection between the second current collecting member 6 and the second electrode terminal 4, a second protrusion 62 may be provided on a surface of the second current collecting member 6 facing the second electrode terminal 4.

In this embodiment, the second wall portion 112 is disposed opposite to the first wall portion 111 in the first direction X, and the first electrode terminal 3 and the second electrode terminal 4 are disposed on the second wall portion 112, which can reduce the distance between the first electrode terminal 3 and the first tab 21 and between the second electrode terminal 4 and the second tab 22, help to reduce the size of the first current collecting member 5 and the second current collecting member 6, and reduce the overcurrent path from the first tab 21 to the first electrode terminal 3 and the overcurrent path from the second tab 22 to the second electrode terminal 4.

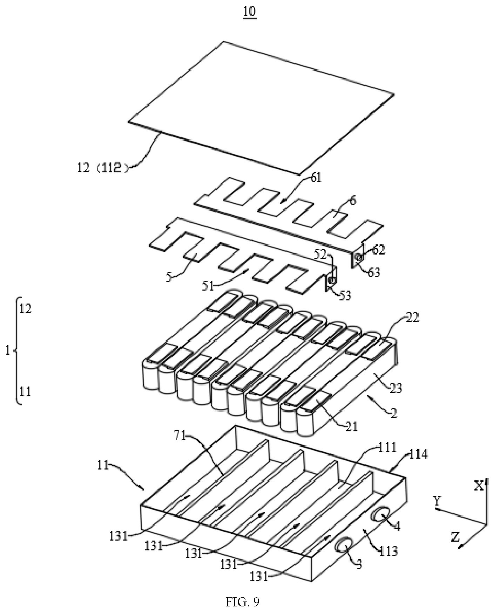

In some embodiments, referring to FIG. 9, FIG. 9 is an exploded view of a battery cell 10 (the electrode assembly 2 being flat) provided in yet some other embodiments of the present application. The housing 1 may include a second wall portion 112 and a third wall portion 113, the first wall portion 111 is disposed opposite to the second wall portion 112 in the first direction X, the third wall portion 113 is connected to the first wall portion 111 and the second wall portion 112, and the third wall portion 113 is provided with a first electrode terminal 3 and a second electrode terminal 4. The first current collecting member 5 is provided with a first extension portion 53, the second current collecting member 6 is provided with a second extension portion 63, both the first extension portion 53 and the second extension portion 63 are located between the main body portion 23 and the third wall portion 113 in the second direction Y, and the first extension portion 53 and the second extension portion 63 are respectively connected to the first electrode terminal 3 and the second electrode terminal 4.

The third wall portion 113 is a wall portion of the housing 1 which is connected to the second wall portion 112 and the first wall portion 111 and is located in the second direction Y, and both the first wall portion 111 and the second wall portion 112 are adjacent to the third wall portion 113. As an example, the second wall portion 112 is the end cover 12, the first wall portion 111 is a wall portion of the shell 11 opposite to the second wall portion 112, and the third wall portion 113 is a wall portion of the shell 11 adjacent to the second wall portion 112.

The first extension portion 53 may have a sheet-like structure connected to the first current collecting member 5, the first extension portion 53 may be connected to one end of the first current collecting member 5 facing the third wall portion 113 in the second direction Y, and an angle formed between the first extension portion 53 and the first current collecting member 5 may be an acute angle, a right angle, an obtuse angle, or the like. In the second direction Y, the first extension portion 53 is located between the main body portion 23 and the third wall portion 113. It may be understood that in the second direction Y, the first extension portion 53 is located between the third wall portion 113 and each main body portion 23, that is, in the second direction Y, the main body portions 23 of all the electrode assemblies 2 are located on one side of the first extension portion 53 facing away from the third wall portion 113.

The second extension portion 63 may have a sheet-like structure connected to the second current collecting member 6, the second extension portion 63 may be connected to one end of the second current collecting member 6 facing the third wall portion 113 in the second direction Y, and an angle formed between the second extension portion 63 and the second current collecting member 6 may be an acute angle, a right angle, an obtuse angle, or the like. In the second direction Y, the second extension portion 63 is located between the main body portion 23 and the third wall portion 113. It may be understood that in the second direction Y, the second extension portion 63 is located between the third wall portion 113 and each main body portion 23, that is, in the second direction Y, the main body portions 23 of all the electrode assemblies 2 are located on one side of the second extension portion 63 facing away from the third wall portion 113.

The first extension portion 53 may be connected to the first electrode terminal 3 in various ways to realize the electrical connection between the first current collecting member 5 and the first electrode terminal 3, such as welding, conductive adhesive bonding, etc. In order to facilitate the connection between the first extension portion 53 and the first electrode terminal 3, a first protrusion 52 may be provided on a surface of the first extension portion 53 facing the first electrode terminal 3. The second extension portion 63 may be connected to the second electrode terminal 4 in various ways to realize the electrical connection between the second current collecting member 6 and the second electrode terminal 4, such as welding, conductive adhesive bonding, etc. In order to facilitate the connection between the second extension portion 63 and the second electrode terminal 4, a second protrusion 62 may be provided on a surface of the second extension portion 63 facing the second electrode terminal 4.

In this embodiment, the first electrode terminal 3 and the second electrode terminal 4 are disposed on the third wall portion 113 connected to the first wall portion 111 and the second wall portion 112, so that the first electrode terminal 3 and the second electrode terminal 4 are not disposed on the first wall portion 111 and the second wall portion 112, making it less likely for multiple battery cells 10 to be affected by the first electrode terminal 3 and the second electrode terminal 4 when stacked in the first direction X, and enabling the multiple battery cells 10 to be tightly stacked in the first direction X. In addition, the first current collecting member 5 is provided with the first extension portion 53, the first extension portion 53 is located between the main body portion 23 and the third wall portion 113, and the first extension portion 53 is connected to the first electrode terminal 3, which enables the connection region between the first current collecting member 5 and the first tab 21 to be farther away from the connection region between the first extension portion 53 and the first electrode terminal 3, thereby reducing the risk of mutual influence and helping to reduce the connection difficulty among the first current collecting member 5, the first tab 21 and the first electrode terminal 3. The second current collecting member 6 is provided with the second extension portion 63, the second extension portion 63 is located between the main body portion 23 and the third wall portion 113, and the second extension portion 63 is connected to the second electrode terminal 4, which enables the connection region between the second current collecting member 6 and the second tab 22 to be farther away from the connection region between the second extension portion 63 and the second electrode terminal 4, thereby reducing the risk of mutual influence and helping to reduce the connection difficulty among the second current collecting member 6, the second tab 22 and the second electrode terminal 4.

In some embodiments, continuously referring to FIG. 9, the housing 1 includes a shell 11 and an end cover 12, wherein the shell 11 is provided with a first opening 114, and the end cover 2111 fits to the first opening 114. A wall portion of the shell 11 opposite to the end cover 12 is the first wall portion 111.

As an example, in FIG. 9, an opening is formed at one end of the shell 11, and one end cover 12 is provided in the housing 1.

It may be understood that the multiple separation walls 71 in the separation apparatus 7 are connected to the wall portion of the shell 11 opposite to the end cover 12.

In this embodiment, if a wall portion of the shell 11 opposite to the end cover 12 is the first wall portion 111, then the multiple separation walls 71 are connected to the wall portion of the shell 11 opposite to the end cover 12. When the battery cell 10 is assembled, the electrode assembly 2 may be first installed into the shell 11, and then the end cover 12 is connected to the shell 11, making the assembly difficulty of the battery cell 10 lower.

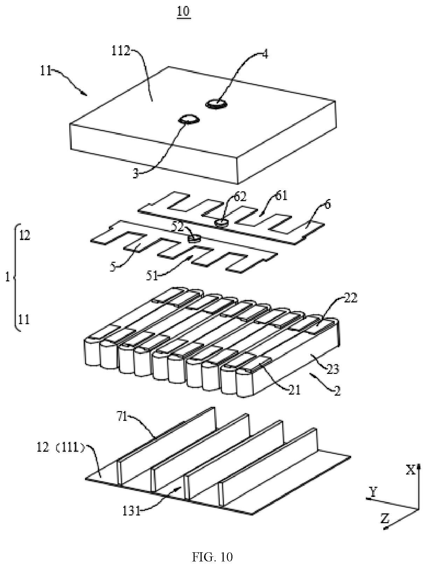

In some embodiments, referring to FIG. 10, FIG. 10 is an exploded view of a battery cell 10 (an electrode assembly 2 being flat) provided in still some other embodiments of the present application. The housing 1 includes a shell 11 and an end cover 12, wherein the shell 11 is provided with a first opening 114, and the end cover 12 fits to the first opening 114. The end cover 12 is the first wall portion 111.

As an example, in FIG. 10, an opening is formed at one end of the shell 11, and one end cover 12 is provided in the housing 1.

It may be understood that the multiple separation walls 71 in the separation apparatus 7 are connected to the end cover 12.

In this embodiment, if the end cover 12 is the first wall portion 111, then the multiple separation walls 71 are connected to the end cover 12. The end cover 12 has a smaller volume and weight than the shell 11, and the connection difficulty between the multiple separation walls 71 and the end cover 12 is lower.

In some embodiments, continuously referring to FIGS. 9 and 10, the electrode assembly 2 is flat, and the multiple sub-spaces 131 are arranged in the thickness direction of the electrode assembly 2.

The flat electrode assembly 2 may be of a laminated structure or a wound structure. The thickness of the flat electrode assembly 2 is less than the width of the electrode assembly 2 and the length of the electrode assembly 2. The electrode assembly 2 may be substantially in the shape of a rectangular parallelepiped. The first tab 21 and the second tab 22 may be disposed at one end of the main body portion 23 in the width direction of the electrode assembly 2. If the electrode assembly 2 is of a laminated structure, the laminating direction of the electrode plates in the electrode assembly 2 is parallel to the thickness direction of the electrode assembly 2; and if the electrode assembly 2 is of a wound structure, the electrode assembly 2 includes a straight region and a bent region, the bent region is connected to the straight region, and the laminating direction of the electrode plates in the straight region is parallel to the thickness direction of the electrode assembly 2.

As an example, the multiple sub-spaces 131 are arranged in the second direction Y, the second direction Y is parallel to the thickness direction of the electrode assembly 2, the first direction X is parallel to the width direction of the electrode assembly 2, and the third direction Z is parallel to the length direction of the electrode assembly 2.

In this embodiment, the electrode assembly 2 is flat, and has the largest expansion in its thickness direction. Since the multiple sub-spaces 131 are arranged in the thickness direction of the electrode assembly 2, the expansion force generated by the expansion of the electrode assembly 2 in the thickness direction may be borne by the separation wall 71, so as to reduce the accumulation of expansion stress of the electrode assemblies 2 in adjacent sub-spaces 131, thereby reducing the risk of the electrode assemblies 2 compressing and deforming each other.

In some embodiments, continuously referring to FIGS. 9 and 10, each sub-space 131 accommodates multiple electrode assemblies 2, and the multiple electrode assemblies 2 in each sub-space 131 are laminated in the thickness direction of the electrode assemblies 2.

The electrode assemblies 2 in the sub-space 131 may be two, three, four, five, etc. The number of electrode assemblies 2 in each sub-space 131 may be equal or unequal. As an example, the number of electrode assemblies 2 in each sub-space 131 is equal, which is two.

In this embodiment, each sub-space 131 accommodates multiple electrode assemblies 2 laminated in the thickness direction, so that the thickness of the electrode assembly 2 in each sub-space 131 is not too large, thereby reducing the manufacturing difficulty of the electrode assembly 2.

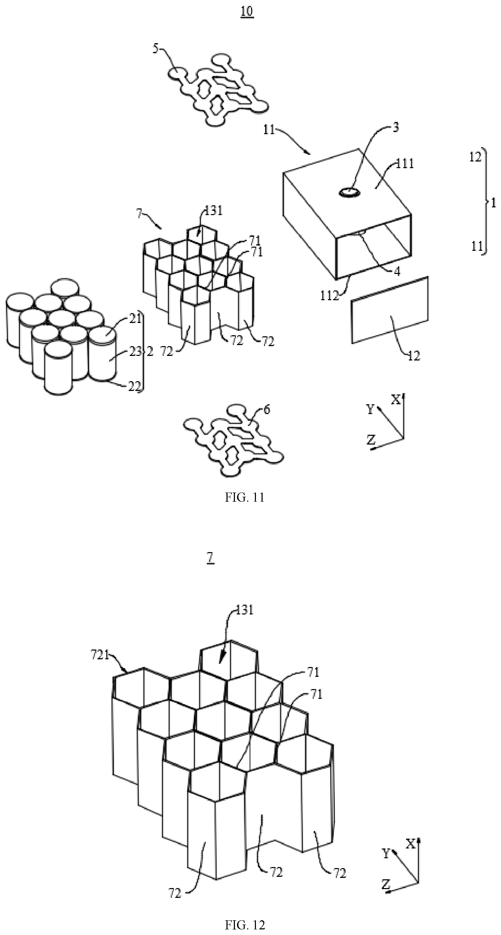

In some embodiments, referring to FIG. 11, FIG. 11 is an exploded view of a battery cell 10 (an electrode assembly 2 being cylindrical) provided in some embodiments of the present application. The sub-space 131 is formed inside the separation apparatus 7.

It may be understood that the sub-space 131 is located both inside the housing 1 and inside the separation apparatus 7. The sub-space 131 may have various shapes, such as a cylinder, a prism, or the like. The prism may be a triangular prism, a quadrangular prism, a pentagonal prism, a hexagonal prism, or the like. As an example, in FIG. 11, the sub-space 131 is in the shape of a hexagonal prism.

Multiple sub-spaces 131 are provided inside the separation apparatus 7, and the multiple sub-spaces 131 may be arranged in a certain direction. Taking the battery cell 10 being in the shape of a rectangular parallelepiped as an example, the multiple sub-spaces 131 may be arranged in the separation apparatus 7 in the length, width or thickness direction of the battery cell 10. The multiple sub-spaces 131 may also be arranged in the separation apparatus 7 in multiple directions, for example, the multiple sub-spaces 131 are distributed in the separation apparatus 7 in multiple rows and multiple columns.

In this embodiment, the sub-space 131 is formed inside the separation apparatus 7, and after the electrode assembly 2 is accommodated in the sub-space 131, the separation apparatus 7 may bear the expansion force of the electrode assembly 2 in multiple directions, thereby further improving the reliability of the battery cell 10.

In some embodiments, continuously referring to FIG. 12, FIG. 12 is a schematic structural view of the separation apparatus 7 shown in FIG. 11. The separation apparatus 7 includes multiple receiving units 72 disposed in the accommodating space 13, and one sub-space 131 is formed inside each receiving unit 72.

The multiple receiving units 72 in the separation apparatus 7 may be independent of each other, or at least two receiving units 72 may be connected to each other. As an example, in FIG. 12, all the receiving units 72 are connected to each other to form a whole. In two adjacent receiving units 72, if the two receiving units 72 are connected to each other, same may be directly connected, or may be indirectly connected through an intermediate connecting member. If two adjacent receiving units 72 are directly connected, the outer surfaces of the two receiving units 72 may be directly connected, or the two receiving units 72 may share one wall portion.

In this embodiment, one sub-space 131 is formed inside each receiving unit 72, the multiple receiving units 72 may receive the electrode assembly 2, and the receiving unit 72 may bear the expansion force of the electrode assembly 2 in the sub-space 131 in multiple directions. In addition, after the electrode assembly 2 is accommodated in the receiving unit 72, the receiving unit 72 may provide a limitation function for the electrode assembly 2, thereby reducing the risk of the electrode assembly 2 tilting and shaking inside the housing 1.

In some embodiments, continuously referring to FIG. 12, two adjacent receiving units 72 share a separation wall 71, and the separation wall 71 is configured to separate sub-spaces 131 of two adjacent receiving units 72.

The separation wall 71 is a wall portion shared by the adjacent receiving units 72, and the electrode assemblies 2 in the two adjacent receiving units 72 are respectively located on both sides of the separation wall 71.

As an example, in FIG. 12, all the receiving units 72 in the separation apparatus 7 are integrally formed, the receiving units 72 are in the shape of a hexagonal prism, the sub-spaces 131 in the receiving units 72 are also in the shape of a hexagonal prism, and the separation apparatus 7 is in the shape of a honeycomb.

In this embodiment, two adjacent receiving units 72 share a separation wall 71, which may increase the volume of the sub-space 131 when the volume of the accommodating space 13 is constant, so as to free up larger space for the electrode assembly 2 and help to improve he volumetric energy density of the battery cell 10. In addition, two adjacent receiving units 72 share a separation wall 71, which enables the multiple receiving units 72 to be used as a whole and makes it simpler to install the separation apparatus 7 in the housing 1.

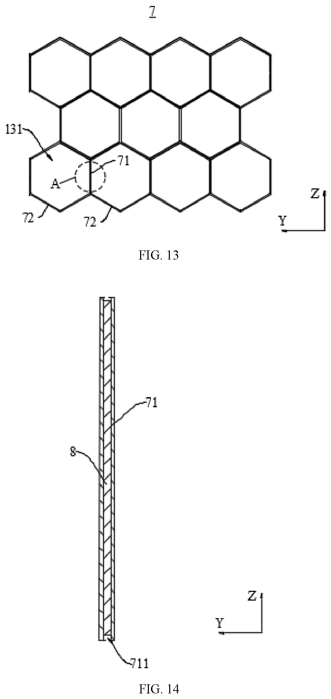

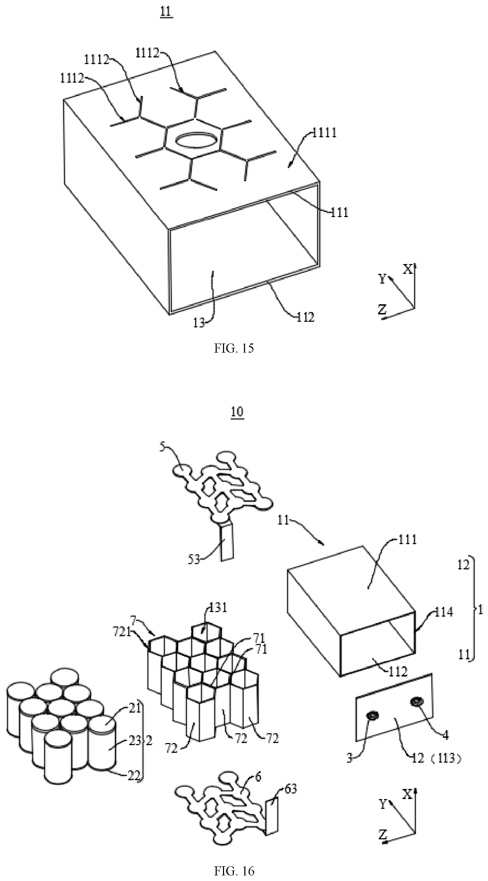

In some embodiments, referring to FIGS. 13-15, FIG. 13 is a top view of the separation apparatus 7 provided in some embodiments of the present application; FIG. 14 is a partial enlarged view at A in FIG. 13; and FIG. 15 is a schematic structural view of the shell 11 provided in some embodiments of the present application. The battery cell 10 further includes a thermal management component 8, an accommodating cavity 711 is formed inside the separation wall 71, and the thermal management component 8 is accommodated in the accommodating cavity 711. A second opening 721 is formed at least one end of the receiving unit 72 in the first direction X for the electrode assembly 2 to enter the sub-space 131, in the first direction X, the housing 1 includes a first wall portion 111 disposed opposite to the separation apparatus 7, an outer surface of the first wall portion 111 is provided with an opening portion 1112 for the thermal management component 8 to enter the accommodating cavity 711, and the opening portion 1112 is communicated with the accommodating cavity 711.

In the first direction X, the second opening 721 may formed at one end of the receiving unit 72 (shown in FIG. 12), or the second openings 721 may be formed at two opposite ends. The first wall portion 111 is a wall portion of the housing 1 that is disposed opposite to the separation apparatus 7 in the first direction X. Taking the housing 1 being in the shape of a rectangular parallelepiped as an example, any one of the length direction, the width direction and the thickness direction of the battery cell 10 may be parallel to the first direction X, that is, the first wall portion 111 may be a wall portion of the housing 1 in the length direction of the battery cell 10, or may be a wall portion of the housing 1 in the width direction of the battery cell 10, or may be a wall portion of the housing 1 in the thickness direction of the battery cell 10.

The end cover 12 may be used as the first wall portion 111, or one wall portion of the shell 11 may be used as the first wall portion 111. In an embodiment in which one wall portion of the shell 11 is used as the first wall portion 111, a wall portion of the shell 11 opposite to the end cover 12 may be used as the first wall portion 111, or a wall portion of the shell 11 adjacent to the end cover 12 may be used as the first wall portion 111. As an example, in FIG. 15, one wall portion of the shell 11 adjacent to the end cover 12 is the first wall portion 111, the first direction X is parallel to the thickness direction of the battery cell 10, and the first wall portion 111 is located in the thickness direction of the battery cell 10.

The opening portion 1112 on the outer surface 1111 of the first wall portion is an entrance for the thermal management component 8 to enter the accommodating cavity 711, and the thermal management component 8 may enter the accommodating cavity 711 through the opening portion 1112. The opening portion 1112 on the outer surface 1111 of the first wall portion may be in one-to-one correspondence with the separation wall 71. The receiving unit 72 may be connected to the first wall portion 111, so that the second opening 721 is not communicated with the accommodating space 13 of the housing 1. The receiving unit 72 and the second wall portion 112 may also be spaced apart in the first direction X, so that there is a distance between the separation wall 71 and the first wall portion 111. The receiving unit 72 and the first wall portion 111 may also keep in contact only, and both are not fixed.

In this embodiment, since the thermal management component 8 is disposed in the accommodating cavity 711 of the separation wall 71, the space inside the separation wall 71 is fully utilized, and in the case of realizing the temperature management of the electrode assembly 2, the space inside the housing 1 occupied by the thermal management component 8 is reduced to free up more space for the electrode assembly 2, which is beneficial to improving the volumetric energy density of the battery cell 10. In addition, since the outer surface 1111 of the first wall portion is provided with the opening portion 1112 communicated with the accommodating cavity 711, the thermal management component 8 may enter the accommodating cavity 711 from the outside of the housing 1 through the opening portion 1112, and the housing 1 does not need to be opened when the thermal management component 8 is mounted or disassembled, making the operation more convenient.

In some embodiments, continuously referring to FIG. 11, the electrode assembly 2 may include a main body portion 23, a first tab 21 and a second tab 22, the polarity of the first tab 21 is opposite to the polarity of the second tab 22, the first tab 21 and the second tab 22 are respectively disposed at two opposite ends of the main body portion 23 in the first direction X, and in the first direction X, two opposite ends of the receiving unit 72 are each provided with a second opening 721 for the electrode assembly 2 to enter the sub-space 131. The battery cell 10 includes a first current collecting member 5 and a second current collecting member 6, the first current collecting member 5 and the second current collecting member 6 are respectively disposed on two opposite sides of the main body portion 23 in the first direction X, the first current collecting member 5 is connected to the first tabs 21 of the multiple electrode assemblies 2, and the second current collecting member 6 is connected to the second tabs 22 of the multiple electrode assemblies 2.

The first tab 21 and the second tab 22 are respectively disposed at two opposite ends of the main body portion 23 in the first direction X, one of the first tab 21 and the second tab 22 is a positive electrode tab, and the other is a negative electrode tab. Two opposite ends of the receiving unit 72 in the first direction X are each provided with a second opening 721, the second opening 721 is communicated with the sub-space 131, and the first tab 21 and the second tab 22 may pass through two second openings 721 and are respectively connected to the first current collecting member 5 and the second current collecting member 6.

Both the first current collecting member 5 and the second current collecting member 6 are located in the accommodating space 13, and the first current collecting member 5 and the second current collecting member 6 are respectively located on two opposite sides of the main body portion 23 in the first direction X, so as to be respectively connected to the first tab 21 and the second tab 22 located at two opposite ends of the main body portion 23. The first current collecting member 5 and the second current collecting member 6 are also respectively located on two opposite sides of the separation apparatus 7 in the first direction X. The first tabs 21 of all the electrode assemblies 2 are connected to the first current collecting member 5, and the second tabs 22 of all the electrode assemblies 2 are connected to the second current collecting member 6. The first tab 21 may be connected to the first current collecting member 5 in various ways to realize the electrical connection between the first tab 21 and the first current collecting member 5, such as welding, conductive adhesive bonding, etc. The second tab 22 may be connected to the second current collecting member 6 in various ways to realize the electrical connection between the second tab 22 and the second current collecting member 6, such as welding, conductive adhesive bonding, etc.

In this embodiment, the first tab 21 and the second tab 22 are respectively disposed at two opposite ends of the main body portion 23 in the first direction X, and the first current collecting member 5 connected to the first tab 21 and the second current collecting member 6 connected to the second tab 22 are respectively disposed on two opposite sides of the main body portion 23, which may reduce the risk of the first current collecting member 5 and the second current collecting member 6 interfering and shorting each other. In addition, the first current collecting member 5 is connected to the first tabs 21 of the multiple electrode assemblies 2 to realize the convergence of the first tabs 21 of the multiple electrode assemblies 2, and the second current collecting member 6 is connected to the second tabs 22 of the multiple electrode assemblies 2 to realize the convergence of the second tabs 22 of the multiple electrode assemblies 2, which eliminates the need to increase the thickness or volume of a single electrode assembly 2, and can reduce the manufacturing difficulty of the large-capacity battery cell 10.

In some embodiments, continuously referring to FIG. 11, the housing 1 may include a first wall portion 111 and a second wall portion 112, the first wall portion 111 is disposed opposite to the second wall portion 112 in the first direction X, the first wall portion 111 faces one end of the main body portion 23 provided with the first tab 21, the second wall portion 112 faces one end of the main body portion 23 provided with the second tab 22, the first wall portion 111 is provided with a first electrode terminal 3, the second wall portion 112 is provided with a second electrode terminal 4, and the first electrode terminal 3 and the second electrode terminal 4 are respectively connected to the first current collecting member 5 and the second current collecting member 6.

The second wall portion 112 is a wall portion of the housing 1 opposite to the first wall portion 111. In an embodiment in which an opening is formed at one end of the shell 11, one of the second wall portion 112 and the first wall portion 111 may be the end cover 12, and the other may be a wall portion of the shell 11 opposite to the end cover 12, or the second wall portion 112 and the first wall portion 111 may be respectively two opposite wall portions of the shell 11. In an embodiment in which openings are formed at two ends of the shell 11, the second wall portion 112 and the first wall portion 111 may be respectively two opposite wall portions of the shell 11, or the second wall portion 112 and the first wall portion 111 may be respectively two end covers 12. As an example, in FIG. 11, an opening is formed at one end of the shell 11, and the first wall portion 111 and the second wall portion 112 are two opposite wall portions of the shell 11.

The first electrode terminal 3 may be installed on the first wall portion 111 in an insulated manner, and the second electrode terminal 4 may be installed on the second wall portion 112 in an insulated manner. In the first direction X, the first current collecting member 5 is located between the separation apparatus 7 and the first wall portion 111, and the second current collecting member 6 is located between the separation apparatus 7 and the second wall portion 112. The first current collecting member 5 may be connected to the first electrode terminal 3 in various ways to realize the electrical connection between the first current collecting member 5 and the first electrode terminal 3, such as welding, conductive adhesive bonding, etc. The second current collecting member 6 may be connected to the second electrode terminal 4 in various ways to realize the electrical connection between the second current collecting member 6 and the second electrode terminal 4, such as welding, conductive adhesive bonding, etc.

In this embodiment, the first wall portion 111 faces one end of the main body portion 23 provided with the first tab 21, the first electrode terminal 3 is disposed on the first wall portion 111, and the first current collecting member 5 is connected to the first electrode terminal 3 and the first tab 21, which can reduce the distance between the first electrode terminal 3 and the first tab 21, reduce the size of the first current collecting member 3, and reduce the overcurrent path from the first tab 21 to the first electrode terminal 3. The second wall portion 112 faces one end of the main body portion 23 provided with the second tab 22, the second electrode terminal 4 is disposed on the second wall portion 112, and the second current collecting member 6 is connected to the second electrode terminal 4 and the second tab 22, which can reduce the distance between the second electrode terminal 4 and the second tab 22, reduce the size of the second current collecting member 6, and reduce the overcurrent path from the second tab 22 to the second electrode terminal 4.

In some embodiments, referring to FIG. 16, FIG. 16 is an exploded view of the battery cell 10 (the electrode assembly 2 being cylindrical) provided in some other embodiments of the present application. The housing 1 includes a first wall portion 111, a second wall portion 112 and a third wall portion 113, in the first direction X, the first wall portion 111 is disposed opposite to the second wall portion 112, the third wall portion 113 is connected to the first wall portion 111 and the second wall portion 112, and the third wall portion 113 is provided with a first electrode terminal 3 and a second electrode terminal 4. The first current collecting member 5 is provided with a first extension portion 53, the second current collecting member 6 is provided with a second extension portion 63, both the first extension portion 53 and the second extension portion 63 are located between the main body portion 23 and the third wall portion 113 in the second direction Y, the first extension portion 53 and the second extension portion 63 are respectively connected to the first electrode terminal 3 and the second electrode terminal 4, and the second direction Y intersects the first direction X.

The third wall portion 113 is a wall portion of the housing 1 which is connected to the second wall portion 112 and the first wall portion 111 and is located in the second direction Y, and both the first wall portion 111 and the second wall portion 112 are adjacent to the third wall portion 113. If the first wall portion 111 and the second wall portion 112 are two opposite wall portions of the shell 11, the third wall portion 113 may be a wall portion of the shell 11 connected to the first wall portion 111 and the second wall portion 112, or the third wall portion 113 may be the end cover 12 connected to the first wall portion 111 and the second wall portion 112.

The first extension portion 53 may have a sheet-like structure connected to the first current collecting member 5, the first extension portion 53 may be connected to one end of the first current collecting member 5 facing the third wall portion 113 in the second direction Y, and an angle formed between the first extension portion 53 and the first current collecting member 5 may be an acute angle, a right angle, an obtuse angle, or the like. In the second direction Y, the first extension portion 53 is located between the main body portion 23 and the third wall portion 113. It may be understood that in the second direction Y, the first extension portion 53 is located between the third wall portion 113 and each main body portion 23, that is, in the second direction Y, the main body portions 23 of all the electrode assemblies 2 are located on one side of the first extension portion 53 facing away from the third wall portion 113. The first extension portion 53 may be connected to the first electrode terminal 3 in various ways to realize the electrical connection between the first current collecting member 5 and the first electrode terminal 3, such as welding, conductive adhesive bonding, etc.

The second extension portion 63 may have a sheet-like structure connected to the second current collecting member 6, the second extension portion 63 may be connected to one end of the second current collecting member 6 facing the third wall portion 113 in the second direction Y, and an angle formed between the second extension portion 63 and the second current collecting member 6 may be an acute angle, a right angle, an obtuse angle, or the like. In the second direction Y, the second extension portion 63 is located between the main body portion 23 and the third wall portion 113. It may be understood that in the second direction Y, the second extension portion 63 is located between the third wall portion 113 and each main body portion 23, that is, in the second direction Y, the main body portions 23 of all the electrode assemblies 2 are located on one side of the second extension portion 63 facing away from the third wall portion 113. The second extension portion 63 may be connected to the second electrode terminal 4 in various ways to realize the electrical connection between the second current collecting member 6 and the second electrode terminal 4, such as welding, conductive adhesive bonding, etc.

Both the first electrode terminal 3 and the second electrode terminal 4 are disposed on the third wall portion 113, the first electrode terminal 3 and the second electrode terminal 4 may be arranged in the third direction Z, and the first direction X, the second direction Y and the third direction Z intersect in pairs and are not coplanar. Any two of the first direction X, the second direction Y and the third direction Z may be arranged at an acute angle, at a right angle or at an obtuse angle. Taking the first direction X, the second direction Y and the third direction Z being perpendicular in pairs as an example, one of the first direction X, the second direction Y and the third direction Z may be parallel to the length direction of the battery cell 10, another one may be parallel to the width direction of the battery cell 10, and the other one may be parallel to the thickness direction of the battery cell 10.

In this embodiment, the first electrode terminal 3 and the second electrode terminal 4 are disposed on the third wall portion 113 connected to the first wall portion 111 and the second wall portion 112, so that the first electrode terminal 3 and the second electrode terminal 4 are not disposed on the first wall portion 111 and the second wall portion 112, making it less likely for multiple battery cells 10 to be affected by the first electrode terminal 3 and the second electrode terminal 4 when stacked in the first direction X, and enabling the multiple battery cells 10 to be tightly stacked in the first direction X. In addition, the first current collecting member 5 is provided with the first extension portion 53, the first extension portion 53 is located between the main body portion 23 and the third wall portion 113, and the first extension portion 53 is connected to the first electrode terminal 3, which enables the connection region between the first current collecting member 5 and the first tab 21 to be farther away from the connection region between the first extension portion 53 and the first electrode terminal 3, thereby reducing the risk of mutual influence and helping to reduce the connection difficulty among the first current collecting member 5, the first tab 21 and the first electrode terminal 3. The second current collecting member 6 is provided with the second extension portion 63, the second extension portion 63 is located between the main body portion 23 and the third wall portion 113, and the second extension portion 63 is connected to the second electrode terminal 4, which enables the connection region between the second current collecting member 6 and the second tab 22 to be farther away from the connection region between the second extension portion 63 and the second electrode terminal 4, thereby reducing the risk of mutual influence and helping to reduce the connection difficulty among the second current collecting member 6, the second tab 22 and the second electrode terminal 4.

In some embodiments, continuously referring to FIG. 16, a second opening 721 is formed at least one end of the receiving unit 72 in the first direction X for the electrode assembly 2 to enter the sub-space 131. The housing 1 includes a shell 11 and an end cover 12, a first opening 114 is formed at least one end of the shell 11 in the second direction Y, the end cover 12 is in one-to-one correspondence with the first opening 114, the end cover 12 fits to the first opening 114, and the second direction Y intersects the first direction X.

In the first direction X, the second opening 712 is formed at one end of the receiving unit 72, or the second openings 721 may be formed at two opposite ends. In the second direction Y, the first opening 114 may be formed at one end of the shell 11, or the first openings 114 may be formed at two opposite ends. The second direction Y and the first direction X may be arranged at an acute angle, at a right angle or at an obtuse angle.

As an example, the second openings 712 are formed at two ends of the receiving unit 72 in the first direction X, the first opening 114 is formed at one end of the shell 11 in the second direction Y, one end cover 12 is provided, and the end cover 12 correspondingly fits to the first opening 114 of the shell 11 to close the first opening 114. The second direction Y is perpendicular to the first direction X.

In this embodiment, the receiving unit 72 is provided with the second opening 721, and the electrode assembly 2 may enter the receiving unit 72 through the second opening 721, which facilitates the installation of the electrode assembly 2. The second opening 721 of the receiving unit 72 is in the first direction X, the first opening 114 of the shell 11 is located in the second direction Y, and the first direction X intersects the second direction Y, so that the shell 11 may shield the second opening 721 of the receiving unit 72 to limit the electrode assembly 2 in the receiving unit 72, and even if the end cover 12 does not fit to the first opening 114, the electrode assembly 2 is not easily detached from the receiving unit 72 through the second opening 721.

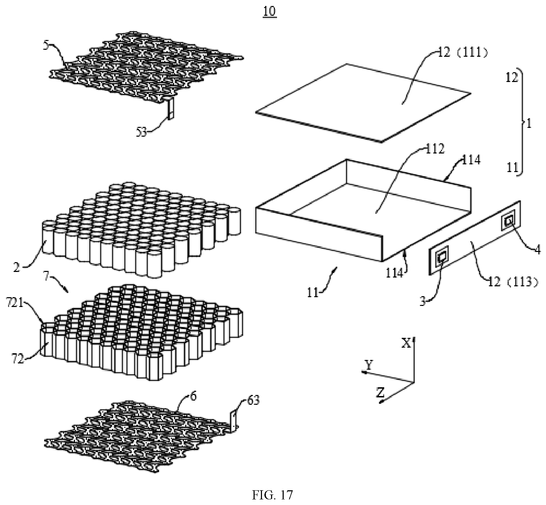

In some embodiments, referring to FIG. 17, FIG. 17 is an exploded view of the battery cell 10 (the electrode assembly 2 being cylindrical) provided in yet some other embodiments of the present application. A second opening 721 is formed at least one end of the receiving unit 72 in the first direction X for the electrode assembly 2 to enter the sub-space 131. The housing 1 includes a shell 11 and an end cover 12, one end of the shell 11 in the first direction X and one end of the shell 11 in the second direction Y are each formed with a first opening 114, the end cover 12 is in one-to-one correspondence with the first opening 114, the end cover 12 fits to the first opening 114, and the second direction Y intersects the first direction X.

In this embodiment, two end covers 12 are provided in the housing 1, the two end covers 12 respectively close the two first openings 114 of the shell 11, and the two end covers 12 are disposed adjacent to each other. In this way, the separation apparatus 7 may be installed in the housing 1 through any one of the two first openings 114 as required.

In some embodiments, continuously referring to FIGS. 16 and 17, at least one wall portion of the housing 1 disposed opposite to the separation apparatus 7 in the first direction X is a wall portion of the housing 1 with the largest outer surface area.

Taking the housing 1 being in the shape of a rectangular parallelepiped as an example, the housing 1 is provided with two wall portions disposed opposite to the separation apparatus 7 in the first direction X, and only one of the two wall portions may be the wall portion of the housing 1 with the largest outer surface area, or both of the two wall portions may be the wall portions of the housing 1 with the largest outer surface area. The wall portion of the housing 1 with the largest outer surface area is a wall portion of the housing 1 in the thickness direction of the battery cell 10. The wall portion of the housing 1 with the largest outer surface area may be a wall portion of the shell 11 or may be the end cover 12. In FIGS. 16 and 17, the first wall portion 111 and/or the second wall portion 112 of the housing 1 may be used as a wall portion of the housing 1 with the largest outer surface area. The area of an outer surface of the second wall portion 112 may be equal to the area of the outer surface 1111 of the first wall portion. In the embodiment shown in FIG. 16, one wall portion of the shell 11 located in the thickness direction of the battery cell 10 is a wall portion of the housing 1 with the largest outer surface area. In the embodiment shown in FIG. 17, one end cover 12 of the housing 1 located in the thickness direction of the battery cell 10 is a wall portion of the housing 1 with the largest outer surface area.

In this embodiment, the second opening 721 is formed at least one end of the receiving unit 72 in the first direction X, and the electrode assembly 2 may enter the receiving unit 72 through the second opening 721 in the first direction X. Since at least one wall portion of the housing 1 disposed opposite to the separation apparatus 7 in the first direction X is a wall portion of the housing 1 with the largest outer surface area, the wall portion of the housing 1 with the largest outer surface area is located in the first direction X, so that the orientation of the second opening 721 is substantially perpendicular to the wall portion of the housing 1 with the largest outer surface area. In this way, more receiving units 72 may be arranged in the accommodating space 13 of the housing 1 to accommodate more electrode assemblies 2.

In some embodiments, continuously referring to FIGS. 16 and 17, in the first direction X, the accommodating space 13 accommodates only one receiving unit 72; in the second direction Y, the accommodating space 13 accommodates multiple receiving units 72; in the third direction Z, the accommodating space 13 accommodates multiple receiving units 72, and the first direction X, the second direction Y and the third direction Z are not coplanar and intersect in pairs.

As an example, the first direction X, the second direction Y and the third direction Z are perpendicular in pairs, the first direction X is parallel to the thickness direction of the battery cell 10, the second direction Y is parallel to the length direction of the battery cell 10, and the third direction Z is parallel to the width direction of the battery cell 10.

In this embodiment, the accommodating space 13 accommodates only one receiving unit 72 in the first direction X, and the accommodating space 13 accommodates multiple receiving units 72 in both the second direction Y and the third direction Z. In the case where the size of the housing 1 in the first direction X is not too large, the accommodating space 13 can accommodate more receiving units 72 to accommodate more electrode assemblies 2, which is beneficial to achieving the large-capacity battery cell 10.

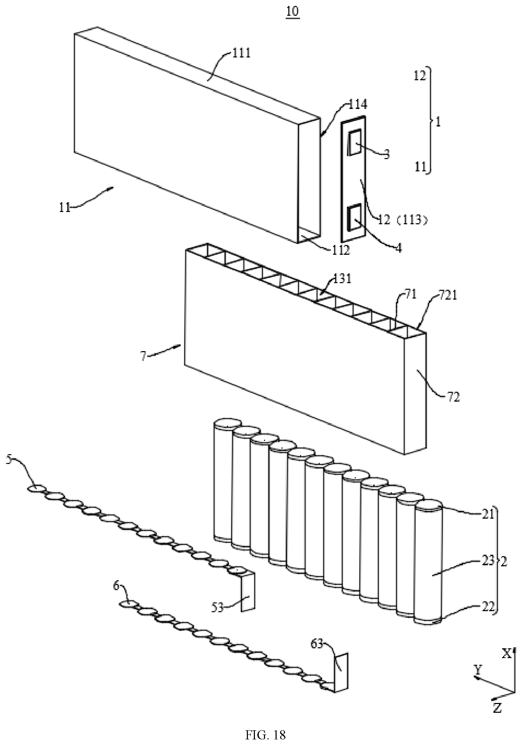

In some embodiments, referring to FIG. 18, FIG. 18 is an exploded view of the battery cell 10 (the electrode assembly 2 being cylindrical) provided in still some other embodiments of the present application. At least one wall portion of the housing 1 disposed opposite to the separation apparatus 7 in the third direction Z is a wall portion of the housing 1 with the largest outer surface area, and the first direction X, the second direction Y and the third direction Z are not coplanar and intersect in pairs.

Taking the housing 1 being in the shape of a rectangular parallelepiped as an example, the housing 1 is provided with two wall portions disposed opposite to the separation apparatus 7 in the third direction Z, and only one of the two wall portions may be the wall portion of the housing 1 with the largest outer surface area, or both of the two wall portions may be the wall portions of the housing 1 with the largest outer surface area. The wall portion of the housing 1 with the largest outer surface area is a wall portion of the housing 1 in the thickness direction of the battery cell 10. The wall portion of the housing 1 with the largest outer surface area may be a wall portion of the shell 11 or may be the end cover 12.

As an example, in the embodiment shown in FIG. 18, the first direction X, the second direction Y and the third direction Z are perpendicular in pairs, the first direction X is parallel to the width direction of the battery cell 10, the second direction Y is parallel to the length direction of the battery cell 10, and the third direction Z is parallel to the thickness direction of the battery cell 10. The wall portion of the housing 1 with the largest outer surface area is a wall portion of the shell 11 in the thickness direction of the battery cell 10, the wall portion of the housing 1 with the largest outer surface area is connected to the first wall portion 111 and the second wall portion 112, the third wall portion 113 is the end cover 12, and the first electrode terminal 3 and the second electrode terminal 4 are disposed on the third wall portion 113.

In this embodiment, the second opening 721 is formed at least one end of the receiving unit 72 in the first direction X, and the electrode assembly 2 may enter the receiving unit 72 through the second opening 721 in the first direction X. Since at least one wall portion of the housing 1 disposed opposite to the separation apparatus 7 in the third direction Z is a wall portion of the housing 1 with the largest outer surface area, the wall portion of the housing 1 with the largest outer surface area is located in the third direction Z, so that the orientation of the second opening 721 is substantially parallel to the wall portion of the housing 1 with the largest outer surface area, and the housing 1 can provide more space for the receiving unit 72 in the first direction X to increase the size of the receiving unit 72 in the first direction X.

In some embodiments, continuously referring to FIG. 18, in the first direction X, the accommodating space 13 accommodates only one receiving unit 72; in the second direction Y, the accommodating space 13 accommodates multiple receiving units 72; and in the third direction Z, the accommodating space 13 accommodates only one receiving unit 72.

In this embodiment, the accommodating space 13 accommodates only one receiving unit 72 in the first direction X and the third direction Z, and the accommodating space 13 accommodates multiple receiving units 72 in the second direction Y. In the case where the size of the housing 1 in the first direction X and the size of the housing 1 in the third direction Z are not too large, the accommodating space 13 can accommodate more receiving units 72 to accommodate more electrode assemblies 2, which is beneficial to achieving the large-capacity battery cell 10.

In some embodiments, continuously referring to FIGS. 16-18, the electrode assembly 2 is cylindrical, and each sub-space 131 accommodates only one electrode assembly 2.

In this embodiment, the electrode assembly 2 is cylindrical, and each sub-space 131 accommodates only one electrode assembly 2. Each electrode assembly 2 is limited by the separation apparatus 7, which reduces the accumulation of expansion stress of two adjacent electrode assemblies 2. In addition, after one electrode assembly 2 is correspondingly accommodated in one sub-space 131, each sub-space 131 can provide a certain limitation function for the corresponding electrode assembly 2, thereby reducing the risk of the electrode assembly 2 tilting and shaking.

In some embodiments, the separation apparatus 7 includes a separation wall 71, the separation wall 71 is configured to separate two adjacent sub-spaces 131, and an accommodating cavity 711 is formed inside the separation wall 71. The battery cell 10 further includes a thermal management component 8, and the thermal management component 8 is accommodated in the accommodating cavity 711.

In this embodiment, the accommodating cavity 711 may be of a closed structure, or may be of an open structure. The thermal management component 8 may be entirely accommodated in the accommodating cavity 711, or may be only partially accommodated in the accommodating cavity 711.

In this embodiment, the accommodating cavity 711 is formed inside the separation wall 71, and the thermal management component 8 is disposed in the accommodating cavity 711 of the separation wall 71, so that the space inside the separation wall 71 is fully utilized, and in the case of realizing the temperature management of the electrode assembly 2, the space inside the housing 1 occupied by the thermal management component 8 is reduced to free up more space for the electrode assembly 2, which is beneficial to improving the volume energy density of the battery cell 10.

In some embodiments, an outer surface of the housing 1 is provided with an opening portion 1112 for the thermal management component 8 to enter the accommodating cavity 711, and the opening portion 1112 is communicated with the accommodating cavity 711.

In this embodiment, the opening portion 1112 may be disposed on the outer surface of the shell 11 or may be disposed on the outer surface of the end cover 12, and the opening portion 1112 may be in one-to-one correspondence with the separation wall. It should be noted that in an embodiment in which the separation wall 71 is connected to the first wall portion 111 of the housing 1, the opening portion 1112 may be disposed on the outer surface 1111 of the first wall portion, or the opening portion 1112 may be disposed on the outer surface of the second wall portion 112 opposite to the first wall portion 111.

In this embodiment, the outer surface of the housing 1 is provided with the opening portion 1112 communicated with the accommodating cavity 711, and the thermal management component 8 may enter the accommodating cavity 711 from the outside of the housing 1 through the opening portion 1112, and the housing 1 does not need to be opened when the thermal management component 8 is mounted or disassembled, making the operation more convenient.

In some embodiments, the housing 1 is in the shape of a rectangular parallelepiped. The multiple electrode assemblies 2 can fully utilize the internal space of the housing 1, thereby improving the space utilization rate of the electrode assemblies 2, and helping to achieve the large-capacity battery cell 10.

An embodiment of the present application provides a battery 100, including the battery cell 10 provided in any one of the above embodiments.

An embodiment of the present application provides an electrical device, including the battery cell 10 provided in any one of the above embodiments, wherein the battery cell 10 is used to provide electric energy for the electrical device.

An embodiment of the present application provides an energy storage apparatus, including the battery cell 10 provided in any one of the above embodiments.

The energy storage apparatus may be a container, an energy storage cabinet, and the like.

Referring to FIGS. 4-8, an embodiment of the present application further provides a battery cell 10, including a housing 1, a separation apparatus 7, a first current collecting member 5, a second current collecting member 6, a first electrode terminal 3, a second electrode terminal 4, and multiple electrode assemblies 2. The housing 1 is provided with an accommodating space 13, and the multiple electrode assemblies 2 are accommodated in the accommodating space 13. The housing 1 includes a shell 11 and an end cover 12, wherein the shell 11 is provided with a first opening 114, and the end cover 12 fits to the first opening 114. The electrode assembly 2 is a flat apparatus, and the electrode assembly 2 includes a main body portion 23, a first tab 21 and a second tab 22, the first tab 21 and the second tab 22 are disposed at a same end of the main body portion 23 in the first direction X, and in the first direction X, the housing 1 is provided with a first wall portion 111 and a second wall portion 112 opposite to each other. The separation apparatus 7 includes multiple separation walls 71, the multiple separation walls 71 are connected to the first wall portion 111, the multiple separation walls 71 are spaced apart in the second direction Y, the multiple separation walls 71 divide the accommodating space 13 into multiple sub-spaces 131, each separation wall 71 is configured to separate two adjacent sub-spaces 131, and each sub-space 131 accommodates one or more electrode assemblies 2. The first current collecting member 5 and the second current collecting member 6 are disposed on one side of the main body portion 23 facing away from the first wall portion 111, the first current collecting member 5 is connected to the first tabs 21 of the multiple electrode assemblies 2, the second current collecting member 6 is connected to the second tabs 22 of the electrode assemblies 2, the first current collecting member 5 and the second current collecting member 6 are arranged in the third direction Z, and the first direction X, the second direction Y and the third direction Z are perpendicular in pairs. Both the first electrode terminal 3 and the second electrode terminal 4 are disposed on the second wall portion 112, the first electrode terminal 3 and the second electrode terminal 4 are respectively connected to the first current collecting member 5 and the second current collecting member 6, and the first electrode terminal 3 and the second electrode terminal 4 are arranged in the third direction Z. The first wall portion 111 is the end cover 12, or the first wall portion 111 is a wall portion of the shell 11 opposite to the end cover 12.

The battery cell 10 further includes a thermal management component 8, an accommodating cavity 711 is formed inside the separation wall 71, the thermal management component 8 is accommodated in the accommodating cavity 711, an outer surface 1111 of the first wall portion is provided with an opening portion 1112 for the thermal management component 8 to enter the accommodating cavity 711, and the opening portion 1112 is communicated with the accommodating cavity 711.

In such a battery cell 10, the separation apparatus 7 is disposed inside the accommodating space 13 of the housing 1, and the separation apparatus 7 divides the accommodating space 13 in to multiple sub-spaces 131. The separation apparatus 7 performs a separation function for the electrode assemblies 2 in each sub-space 131, so as to reduce the accumulation of expansion stress of electrode assemblies 2 in adjacent sub-spaces 131, thereby reducing the risk of the electrode assemblies 2 compressing and deforming each other, and effectively improving the reliability of the battery cell 10. Since the thermal management component 8 is disposed in the accommodating cavity 711 of the separation wall 71, the space inside the separation wall 71 is fully utilized, and in the case of realizing the temperature management of the electrode assembly 2, the space inside the housing 1 occupied by the thermal management component 8 is reduced to free up more space for the electrode assembly 2, which is beneficial to improving the volumetric energy density of the battery cell 10. In addition, since the outer surface 1111 of the first wall portion is provided with the opening portion 1112 communicated with the accommodating cavity 711, the thermal management component 8 may enter the accommodating cavity 711 from the outside of the housing 1 through the opening portion 1112, and the housing 1 does not need to be opened when the thermal management component 8 is mounted or disassembled, making the operation more convenient.

Referring to FIGS. 16-18, an embodiment of the present application further provides a battery cell 10, including a housing 1, a separation apparatus 7, a first current collecting member 5, a second current collecting member 6, a first electrode terminal 3, a second electrode terminal 4, and multiple electrode assemblies 2. The housing 1 is provided with an accommodating space 13, and the multiple electrode assemblies 2 are accommodated in the accommodating space 13. The housing 1 includes a shell 11 and an end cover 12, wherein the shell 11 is provided with a first opening 114, and the end cover 12 fits to the first opening 114. The electrode assembly 2 is cylindrical, and the electrode assembly 2 includes a main body portion 23, a first tab 21 and a second tab 22, and the first tab 21 and the second tab 13 are disposed at two opposite ends of the main body portion 23 in the first direction X. The housing 1 is provided with a first wall portion 111, a second wall portion 112 and a third wall portion 113, the first wall portion 111 is disposed opposite to the second wall portion 112 in the first direction X, and the third wall portion 113 is connected to the first wall portion 111 and the second wall portion 112. The separation apparatus 7 is accommodated in the accommodating space 13, the separation apparatus 7 includes multiple receiving units 72, one sub-space 131 is formed inside each receiving unit 72, each sub-space 131 accommodates one or more electrode assemblies 2, two adjacent receiving units 72 share one separation wall 71, and in the first direction X, two opposite ends of the receiving unit 72 are each formed with a second opening 721. In the first direction X, the first current collecting member 5 and the second current collecting member 6 are respectively disposed on two opposite sides of the main body portion 23, the first current collecting member 5 is connected to the first tabs 21 of the multiple electrode assemblies 2, the second current collecting member 6 is connected to the second tabs 22 of the multiple electrode assemblies 2, the first tab 21 passes through one second opening 721 of the receiving unit 72 and is connected to the first current collecting member 5, and the second tab 22 passes through the other second opening 721 of the receiving unit 72 and is connected to the second current collecting member 6. The first electrode terminal 3 and the second electrode terminal 4 are disposed on the third wall. The first current collecting member 5 is provided with a first extension portion 53, the second current collecting member 6 is provided with a second extension portion 63, both the first extension portion 53 and the second extension portion 63 are located between the main body portion 23 and the third wall portion 113 in the second direction Y, the first extension portion 53 and the second extension portion 63 are respectively connected to the first electrode terminal 3 and the second electrode terminal 4, the first electrode terminal 3 and the second electrode terminal 4 are arranged in the third direction Z, and the first direction X, the second direction Y and the third direction Z are perpendicular in pairs.

The battery cell 10 further includes a thermal management component 8, an accommodating cavity 711 is formed inside the separation wall 71, the thermal management component 8 is accommodated in the accommodating cavity 711, an outer surface 1111 of the first wall portion is provided with an opening portion 1112 for the thermal management component 8 to enter the accommodating cavity 711, and the opening portion 1112 is communicated with the accommodating cavity 711.

In such a battery cell 10, the separation apparatus 7 is disposed inside the accommodating space 13 of the housing 1, and the multiple sub-spaces 131 are formed inside the separation apparatus 7. The separation apparatus 7 performs a separation function for the electrode assemblies 2 in each sub-space 131, so as to reduce the accumulation of expansion stress of electrode assemblies 2 in adjacent sub-spaces 131, thereby reducing the risk of the electrode assemblies 2 compressing and deforming each other, and effectively improving the reliability of the battery cell 10. Since the thermal management component 8 is disposed in the accommodating cavity 711 of the separation wall 71, the space inside the separation wall 71 is fully utilized, and in the case of realizing the temperature management of the electrode assembly 2, the space inside the housing 1 occupied by the thermal management component 8 is reduced to free up more space for the electrode assembly 2, which is beneficial to improving the volumetric energy density of the battery cell 10. In addition, since the outer surface 1111 of the first wall portion is provided with the opening portion 1112 communicated with the accommodating cavity 711, the thermal management component 8 may enter the accommodating cavity 711 from the outside of the housing 1 through the opening portion 1112, and the housing 1 does not need to be opened when the thermal management component 8 is mounted or disassembled, making the operation more convenient.

It should be noted that, without contradictory, the embodiments in the present application may be combined with the features in the embodiments.

The above embodiments merely illustrate the technical solutions of the present application and are not intended to limit the present application, and it is obvious to those skilled in the art that the present application may have various modifications and variations. Any modification, equivalent replacement, or improvement made without departing from the spirit and principle of the present application shall fall within the protection scope of the present application.

## Claims

1. A battery cell, comprising:
a housing provided with an accommodating space;
multiple electrode assemblies accommodated in the accommodating space; and
a separation apparatus disposed in the accommodating space, wherein the separating apparatus is configured to divide the accommodating space into multiple sub-spaces, and each sub-space accommodates at least one electrode assembly.

2. The battery cell according to claim 1, wherein the separation apparatus comprises at least one separation wall, the separation wall is disposed in the accommodating space and connected to the housing, and the separation wall is configured to separate two adjacent sub-spaces.

3. The battery cell according to claim 2, wherein the separation apparatus comprises multiple separation walls, and the multiple separation walls are spaced apart in the accommodating space.

4. The battery cell according to claim 3, wherein the housing comprises a first wall portion, and the multiple separation walls are connected to the first wall portion.

5. The battery cell according to claim 4, further comprising a thermal management component, wherein an accommodating cavity is formed inside the separation wall, the thermal management component is accommodated in the accommodating cavity, an outer surface of the first wall portion is provided with an opening portion for the thermal management component to enter the accommodating cavity, and the opening portion is communicated with the accommodating cavity.

6. The battery cell according to claim 4 or 5, wherein the first wall portion is a wall portion of the housing with the largest outer surface area.

7. The battery cell according to any one of claims 4-6, wherein the electrode assembly comprises a main body portion, a first tab and a second tab, the polarity of the first tab is opposite to the polarity of the second tab, the first tab and the second tab are disposed at one end of the main body portion facing away from the first wall portion in a first direction, the multiple separation walls are spaced apart in a second direction, and the first direction intersects the second direction;
the battery cell comprises a first current collecting member and a second current collecting member, the first current collecting member and the second current collecting member are disposed on one side of the main body portion facing away from the first wall portion in the first direction, the first current collecting member is connected to the first tabs of the multiple electrode assemblies, and the second current collecting member is connected to the second tabs of the multiple electrode assemblies.

8. The battery cell according to claim 7, wherein the housing comprises a second wall portion, the second wall portion is disposed opposite to the first wall portion in the first direction, the second wall portion is provided with a first electrode terminal and a second electrode terminal, and the first electrode terminal and the second electrode terminal are respectively connected to the first current collecting member and the second current collecting member.

9. The battery cell according to claim 7, wherein the housing comprises a second wall portion and a third wall portion, the first wall portion is disposed opposite to the second wall portion in the first direction, the third wall portion is connected to the first wall portion and the second wall portion, and the third wall portion is provided with a first electrode terminal and a second electrode terminal;
wherein the first current collecting member is provided with a first extension portion, the second current collecting member is provided with a second extension portion, both the first extension portion and the second extension portion are located between the main body portion and the third wall portion in the second direction, and the first extension portion and the second extension portion are respectively connected to the first electrode terminal and the second electrode terminal.

10. The battery cell according to any one of claims 4-9, wherein the housing comprises:
a shell provided with a first opening; and
an end cover fitting to the first opening,
wherein the end cover is the first wall portion; or a wall portion of the shell opposite to the end cover is the first wall portion.

11. The battery cell according to any one of claims 2-10, wherein the electrode assembly is flat, and the multiple sub-spaces are arranged in a thickness direction of the electrode assembly.

12. The battery cell according to claim 11, wherein each sub-space accommodates the multiple electrode assemblies, and the multiple electrode assemblies in each sub-space are laminated in the thickness direction of the electrode assembly.

13. The battery cell according to claim 1, wherein the sub-space is formed inside the separation apparatus.

14. The battery cell according to claim 13, wherein the separation apparatus comprises multiple receiving units disposed in the accommodating space, and one sub-space is formed inside each receiving unit.

15. The battery cell according to claim 14, wherein two adjacent receiving units share a separation wall, and the separation wall is configured to separate the sub-spaces of the two adjacent receiving units.

16. The battery cell according to claim 15, further comprising a thermal management component, wherein an accommodating cavity is formed inside the separation wall, and the thermal management component is accommodated in the accommodating cavity;
wherein a second opening is formed at least one end of the receiving unit in the first direction for the electrode assembly to enter the sub-space, in the first direction, the housing comprises a first wall portion disposed opposite to the separation apparatus, an outer surface of the first wall portion is provided with an opening portion for the thermal management component to enter the accommodating cavity, and the opening portion is communicated with the accommodating cavity.

17. The battery cell according to any one of claims 14-16, wherein the electrode assembly comprises a main body portion, a first tab and a second tab, the polarity of the first tab is opposite to the polarity of the second tab, the first tab and the second tab are respectively disposed at two opposite ends of the main body portion in the first direction, and in the first direction, two opposite ends of the receiving unit are each provided with a second opening for the electrode assembly to enter the sub-space;
the battery cell comprises a first current collecting member and a second current collecting member, the first current collecting member and the second current collecting member are respectively disposed on two opposite sides of the main body portion in the first direction, the first current collecting member is connected to the first tabs of the multiple electrode assemblies, and the second current collecting member is connected to the second tabs of the multiple electrode assemblies.

18. The battery cell according to claim 17, wherein the housing comprises a first wall portion and a second wall portion, the first wall portion is disposed opposite to the second wall portion in the first direction, the first wall portion faces one end of the main body portion provided with the first tab, the second wall portion faces one end of the main body portion provided with the second tab, the first wall portion is provided with a first electrode terminal, the second wall portion is provided with a second electrode terminal, and the first electrode terminal and the second electrode terminal are respectively connected to the first current collecting member and the second current collecting member.

19. The battery cell according to claim 17, wherein the housing comprises a first wall portion, a second wall portion and a third wall portion, the first wall portion is disposed opposite to the second wall portion in the first direction, the third wall portion is connected to the first wall portion and the second wall portion, and the third wall portion is provided with a first electrode terminal and a second electrode terminal;
wherein the first current collecting member is provided with a first extension portion, the second current collecting member is provided with a second extension portion, both the first extension portion and the second extension portion are located between the main body portion and the third wall portion in the second direction, the first extension portion and the second extension portion are respectively connected to the first electrode terminal and the second electrode terminal, and the second direction intersects the first direction.

20. The battery cell according to any one of claims 14-19, wherein a second opening is formed at least one end of the receiving unit in the first direction for the electrode assembly to enter the sub-space;
the housing comprises a shell and an end cover, a first opening is formed at least one end of the shell in the second direction, the end cover is in one-to-one correspondence with the first opening, the end cover fits to the first opening, and the second direction intersects the first direction.

21. The battery cell according to claim 20, wherein at least one wall portion of the housing disposed opposite to the separation apparatus in the first direction is a wall portion of the housing with the largest outer surface area.

22. The battery cell according to claim 21, wherein in the first direction, the accommodating space accommodates only one receiving unit;
in the second direction, the accommodating space accommodates the multiple receiving units; and
in a third direction, the accommodating space accommodates the multiple receiving units, and the first direction, the second direction and the third direction are not coplanar and intersect in pairs.

23. The battery cell according to claim 20, wherein at least one wall portion of the housing disposed opposite to the separation apparatus in the third direction is a wall portion of the housing with the largest outer surface area, and the first direction, the second direction and the third direction are not coplanar and intersect in pairs.

24. The battery cell according to claim 23, wherein in the first direction, the accommodating space accommodates only one receiving unit;
in the second direction, the accommodating space accommodates the multiple receiving units; and
in the third direction, the accommodating space accommodates only one receiving unit.

25. The battery cell according to any one of claims 13-24, wherein the electrode assembly is cylindrical, and each sub-space accommodates only one electrode assembly.

26. The battery cell according to any one of claims 1-25, wherein the separation apparatus comprises a separation wall, the separation wall is configured to separate two adjacent sub-spaces, and an accommodating cavity is formed inside the separation wall;
the battery cell further comprises a thermal management component, and the thermal management component is accommodated in the accommodating cavity.

27. The battery cell according to claim 26, wherein an outer surface of the housing is provided with an opening portion for the thermal management component to enter the accommodating cavity, and the opening portion is communicated with the accommodating cavity.

28. The battery cell according to any one of claims 1-27, wherein the housing is in the shape of a rectangular parallelepiped.

29. A battery, comprising the battery cell according to any one of claims 1-28.

30. An electrical device, comprising the battery cell according to any one of claims 1-28, wherein the battery cell is used to provide electric energy for the electrical device.

31. An energy storage apparatus, comprising the battery cell according to any one of claims 1-28.
